(19) Europäisches Patentamt
European Patent Office
Office européen des brevets

(11) **EP 1 590 851 B1**

(12) **FASCICULE DE BREVET EUROPEEN**

(45) Date de publication et mention de la délivrance du brevet:
**13.04.2011 Bulletin 2011/15**

(21) Numéro de dépôt: **03799658.4**

(22) Date de dépôt: **19.12.2003**

(51) Int Cl.:
***H01M 10/04*** *(2006.01)*

(86) Numéro de dépôt international:
**PCT/FR2003/003829**

(87) Numéro de publication internationale:
**WO 2004/059779 (15.07.2004 Gazette 2004/29)**

(54) **DISPOSITIF DE PILOTAGE D'ENTRAINEMENT DE FILMS DANS UN DISPOSITIF DE REALISATION D'ENSEMBLES MULTICOUCHES**

STEUERUNGSVORRICHTUNG VON FILMANTRIEB IN EINER ANLAGE ZUR HERSTELLUNG VON VIELSCHICHTIGEN FILMEN

DEVICE FOR CONTROLLING FILMS PULLING IN A DEVICE FOR PRODUCING MULTILAYER ASSEMBLIES

(84) Etats contractants désignés:
**CH IT LI**

(30) Priorité: **23.12.2002 FR 16511**

(43) Date de publication de la demande:
**02.11.2005 Bulletin 2005/44**

(73) Titulaire: **Batscap**
**29500 Ergué-Gabéric (FR)**

(72) Inventeur: **LE GAL, Guy**
**F-29000 Quimper (FR)**

(74) Mandataire: **Texier, Christian et al**
**Cabinet Régimbeau**
**20, rue de Chazelles**
**75847 Paris Cedex 17 (FR)**

(56) Documents cités:
**GB-A- 543 929**

• **PATENT ABSTRACTS OF JAPAN vol. 2000, no. 06, 22 septembre 2000 (2000-09-22) & JP 2000 068170 A (MATSUSHITA ELECTRIC IND CO LTD), 3 mars 2000 (2000-03-03)**
• **PATENT ABSTRACTS OF JAPAN vol. 2000, no. 21, 3 août 2001 (2001-08-03) & JP 2001 118573 A (TOSHIBA BATTERY CO LTD), 27 avril 2001 (2001-04-27)**

## Description

La présente invention concerne le domaine des ensembles de stockage d'énergie électrique.

Plus précisément encore, la présente invention concerne en particulier les ensembles électrochimiques multi-couches à base de matériaux polymères comprenant un électrolyte encadré par deux électrodes formant respectivement cathode et anode.

L'invention s'applique notamment, mais non exclusivement, aux dispositifs comprenant une anode à base de lithium.

La présente invention s'applique à la réalisation de condensateurs, super-condensateurs et générateurs ou batteries.

Des exemples de tels ensembles électrochimiques pourront être trouvés dans les documents FR-A-2737339, FR-A-2759087, FR-A-2759211, FR-A-2808622.

Ces ensembles sont généralement réalisés à partir d'une pluralité de films mono-couche ou multi-couches, rassemblés et superposés pour former un complexe. Le complexe ainsi obtenu est généralement enroulé sur un mandrin circulaire de révolution.

Les dispositifs connus de réalisation d'ensembles de stockage d'énergie électrique comprennent généralement une pluralité de bobines d'alimentation en film, des moyens d'entraînement pour faire défiler ces films à partir des bobines d'alimentation et des moyens pour superposer ces films en un complexe.

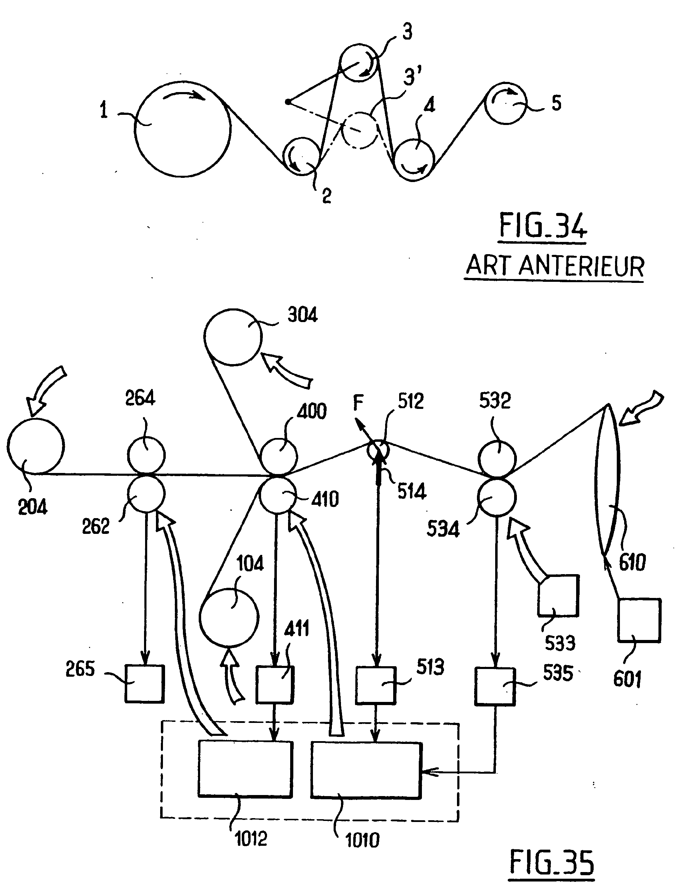

La figure 34 représente schématiquement un exemple de système connu de contrôle du défilement d'une bande de film. Ce système comprend une bobine d'alimentation 1 à partir de laquelle est dévidé le film, un rouleau de détour 2, un rouleau danseur 3, un rouleau d'entraînement 4 et un mandrin 5 sur lequel est enroulée la bande de film. Le rouleau d'entraînement 4 entraîne la bande en défilement à vitesse contrôlée asservie sur la base d'un signal pilote obtenu en sortie de la bobine d'alimentation 1. Le rouleau danseur 3 exerce sur la bande de film une force F permettant d'assurer une mise en tension quasi-constante de la bande de film.

Ce système est particulièrement adapté à des processus de réalisation en continu d'enroulements sur mandrin circulaire de révolution, entraîné en rotation à vitesse constante, pour lesquels les arrêts et les redémarrages sont progressifs.

Les inventeurs ont constaté qu'il est particulièrement avantageux de réaliser de tels ensembles de stockage d'énergie électrique sous forme d'un enroulement multi-couches généralement plan dès l'origine, afin d'éviter la réalisation de plis ou défauts équivalents dans la structure desdits ensembles.

En effet, les inventeurs ont constaté que la réalisation de tels ensembles sous forme d'un enroulement circulaire de révolution, ultérieurement aplani, conduit fréquemment à des défauts tels que plis ou bosses dans les différentes couches, et un mauvais interface entre celles-ci, le cas échéant un décollement local entre les différentes couches entraînant un affaiblissement de la capacité de stockage, en raison des contraintes générées dans les spires qui ont un développé différent d'une spire à l'autre.

Les inventeurs ont également constaté que ces problèmes, liés à l'état de la technique, peuvent accélérer le vieillissement des éléments, en diminuant le nombre de cycles charges/décharges tolérés par les éléments, dans le cas de batteries, voire aller jusqu'à l'autodécharge des éléments.

Afin de réaliser des enroulements plats, il est possible d'utiliser un mandrin de forme non-circulaire, par exemple elliptique.

Ce mandrin peut avantageusement être piloté à une vitesse non-constante de manière à obtenir une vitesse de défilement des films quasi-constante.

Cependant un tel mandrin ne peut être aisément piloté en couple sur la base d'un signal d'asservissement amont issu_d'une bobine d'alimentation à cause de la forte variation de son rayon.

En outre dans le cadre d'un dispositif de réalisation automatique d'ensembles de stockage d'énergie travaillant à une cadence élevée (vitesse de défilement de l'ordre de 6 mètres par minute) et une fréquence d'interruption élevée (arrêt du défilement toutes les minutes), la fréquence des arrêts et départs ne permet pas d'utiliser les moyens de pilotage de course importante en présentant un encombrement important de la figure 34.

La présente invention a néanmoins pour objet un dispositif permettant la réalisation, en automatique, d'ensembles de stockage d'énergie électrique.

Le document GB 5 433 929 décrit un système de réalisation d'ensembles de stockage d'énergie comprenant un tambour, des moyens d'entrainement d'un film complexe, chacun étant constitué d'un couple de rouleaux, et des moyens d'enroulement du film complexe. Le tambour entraine, grâce à un mécanisme à engrenages, les moyens d'enroulement du film complexe ainsi que chaque couple de rouleaux,

Un but particulier de l'invention est donc de proposer un système de contrôle du défilement d'un film complexe adapté pour fournir, à la demande d'un mandrin d'enroulement, notamment un mandrin présentant une section droite non circulaire de révolution, un débit de film complexe à une vitesse correspondant à la vitesse linéaire d'appel du mandrin.

Ce but est atteint dans le cadre de la présente invention grâce à un dispositif de réalisation d'ensembles de stockage d'énergie électrique selon la revendication 1 annexée.

La présente invention concerne également un procédé pour la réalisation de tels enroulements.

D'autres caractéristiques, buts et avantages de la présente invention apparaîtront à la lecture de la description détaillée qui va suivre et en regard des dessins annexés donnés à titre d'exemples non limitatifs et sur lesquels :

- la figure 1 représente une vue générale schématique des moyens principaux composant le dispositif conforme à la présente invention,
- la figure 2 représente une vue en bout partielle à échelle agrandie d'un mandrin d'enroulement conforme à un mode de réalisation préférentiel de la présente invention,
- la figure 3 représente une vue schématique des moyens d'enroulement conformes à la présente invention, composés de la combinaison d'un tel mandrin d'enroulement et d'un rouleau presseur associé,
- les figures 4, 5 et 6 représentent des vues similaires des moyens d'enroulement dans trois positions successives de leur cinématique,
- la figure 7 représente une vue partielle de moyens conformes à la présente invention situés en amont d'un ensemble de complexage,
- la figure 8 représente une vue partielle similaire de moyens conformes à la présente invention situés en aval de cet ensemble de complexage et en amont d'un module d'enroulement,
- les figures 9 à 16, qui seront décrites plus en détail par la suite, illustrent schématiquement, en coupe transversale, les structures multi-couches mises en oeuvre à différents stades de l'alimentation du dispositif conforme à la présente invention,
- les figures 17 à 20, qui seront également décrites plus en détail par la suite, représentent des vues en coupe transversale des trois structures multi-couches de base utilisées dans le cadre de l'invention et de la structure multi-couche résultante, avant pelliculage, destinée à l'alimentation du mandrin, les figures 17 à 20 illustrant plus précisément le positionnement relatif des bords latéraux longitudinaux des différentes couches impliquées,
- la figure 21 représente schématiquement un enroulement conforme à la présente invention (la figure 21 représente un nombre de spires inférieur à la réalité pour simplifier l'illustration),
- la figure 22 représente schématiquement des moyens d'entraînement d'un mandrin d'enroulement et d'un rouleau presseur associé, conformes à la présente invention,
- la figure 23 représente schématiquement des moyens de coupe localisée d'un collecteur de courant,
- la figure 24 représente schématiquement le collecteur de courant résultant comportant des coupes localisées,
- la figure 25 représente schématiquement un enroulement comportant de telles coupes,
- la figure 26 représente schématiquement le déploiement d'un collecteur de courant obtenu grâce à de telles coupes,
- la figure 27 représente les courbes d'évolution de vitesse du mandrin d'enroulement conforme à la présente invention et d'un rouleau presseur associé, à l'origine de l'enroulement, pour une rotation complète sur 360°, en fonction de leur position angulaire,
- la figure 28 représente des courbes similaires de variation de vitesse du mandrin et du rouleau presseur à la fin d'un enroulement, en fonction de leur position angulaire,
- la figure 29 représente la variation du rayon d'enroulement en fonction de l'angle du mandrin ainsi qu'une courbe de variation d'un facteur de correction en fonction de cet angle,
- la figure 30 représente un tableau qui illustre les données utilisées pour piloter l'évolution de la vitesse de rotation du mandrin d'enroulement,
- la figure 31 représente une vue schématique du bord tranchant d'une lame de coupe conforme à un mode de réalisation préférentiel de la présente invention,
- la figure 32 représente schématiquement un mode de réalisation préférentiel d'un dépelliculeur conforme à la présente invention,
- la figure 33 représente un synoptique général du dispositif conforme à la présente invention,
- la figure 34 déjà commenté représente schématiquement un système de contrôle du défilement d'une bande de film de l'art antérieur, et
- la figure 35 représente schématiquement un exemple de dispositif de pilotage d'entraînement de films en défilement conforme à l'invention.

Dans la suite de la description on utilisera les termes « amont » et « aval » en référence au sens de déplacement des complexes dans le dispositif, le terme « amont » qualifiant les éléments situés avant une référence donnée, tandis que le terme « aval » qualifie les éléments situés après celle-ci.

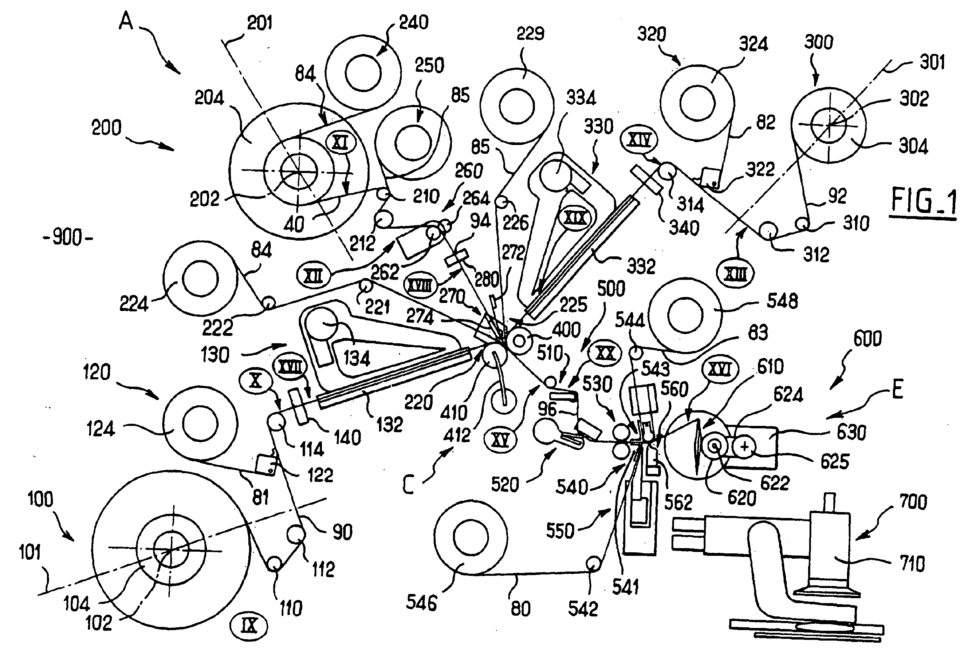

Le dispositif de réalisation d'ensembles de stockage d'énergie électrique conforme à la présente invention comprend essentiellement, comme illustré sur la figure 1 annexée :

- des moyens A d'alimentation en structures multi-couches, et
- des moyens E d'enroulement de ces structures.

Les moyens d'alimentation A ont pour fonction d'acheminer plusieurs ensembles mono-couches ou multi-couches 90, 92, 94, initialement séparés et de complexer, c'est-à-dire de superposer et de lier, ceux-ci. Les moyens d'alimentation A ont également pour fonction d'assurer un positionnement relatif précis des bords longitudinaux des différentes couches impliquées dans le complexe final 96.

Les différents éléments mono-couches ou multi-couches et les complexes résultant mis en oeuvre dans le cadre de la présente invention, sont déplacés parallèlement à un bâti 900 dont la fonction sera définie plus en détail par la suite.

Le mode de réalisation particulier du dispositif illustré sur la figure 1 annexée est destiné à la réalisation d'ensembles générateurs formés d'un empilement de six couches : un collecteur 10 (par exemple en aluminium), une cathode 20 (par exemple à base de POE (polyoxyéthylène) et de sel de lithium), une couche d'électrolyte 30, une anode 40, par exemple en lithium, une couche d'électrolyte 50 et une cathode 60. Les électrolytes 30 et 50 sont par exemple à base de $LiV_3O_8$ ou $V_2O_5$ et POE. Le collecteur en Al 10 est de préférence revêtu d'une barrière anticorrosion, par exemple à base de nitrure de Ti ou autre, graphite par exemple.

Cependant, l'invention n'est pas limitée à cet exemple particulier.

Dans ce contexte, les moyens d'alimentation A comprennent trois magasins d'alimentation séparés 100, 200 et 300.

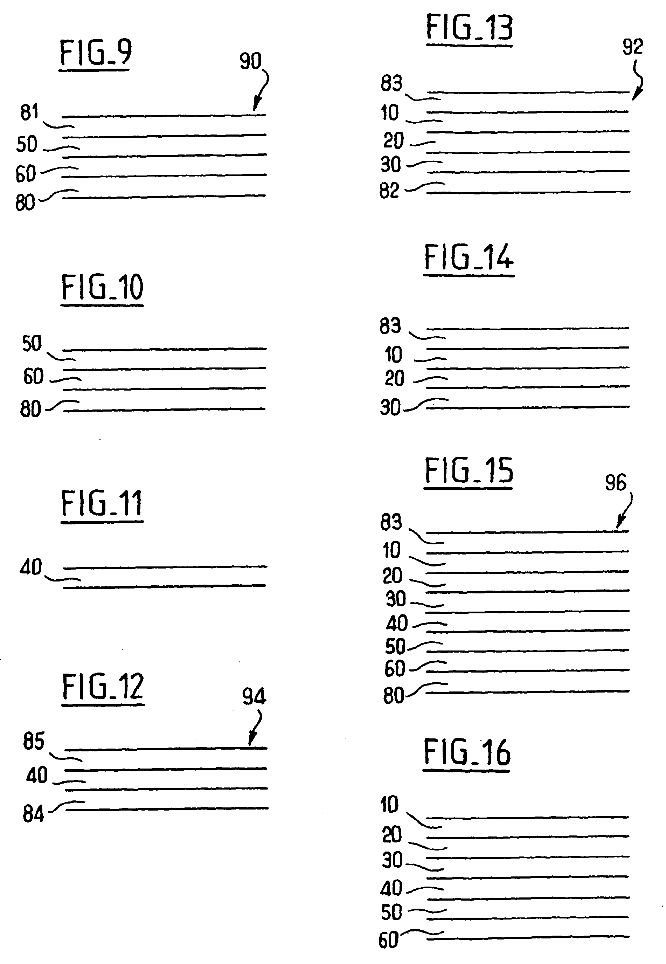

Le moyen d'alimentation 100 est destiné à l'alimentation d'un complexe 90 quatre couches comprenant la cathode 60 et la couche d'électrolyte 50 précitées placées en sandwich entre deux pellicules externes de protection 80, 81 (voir figure 9).

Le moyen d'alimentation 200 est destiné à l'alimentation de la feuille d'anode 40 (voir figure 11).

Le moyen d'alimentation 300 est destiné à l'alimentation d'un complexe 92 cinq couches comprenant : l'électrolyte 30, la cathode 20 et le collecteur 10 pris en sandwich entre deux pellicules externes de protection 82, 83 (voir figure 13).

De préférence, chacun de ces moyens d'alimentation 100, 200, 300 comprend une bobine du complexe souhaité, 90, 40 ou 92, préalablement réalisée par tout moyen approprié, placée à rotation sur le bâti commun 900 autour d'axes de rotation respectifs 102, 202, 302.

Bien entendu, les bobines formant les magasins d'alimentation 100, 200 et 300 sont montées de manière amovible sur le bâti 900 pour pouvoir être remplacées après épuisement.

Le complexage des trois ensembles 90, 40 et 92 issus respectivement des trois moyens d'alimentation 100, 200 et 300, c'est-à-dire l'empilage de ces ensembles, est réalisé dans un module de complexage C interposé entre la sortie des moyens d'alimentation 100, 200, 300, et les moyens d'enroulement E.

Sur la figure 1, les bobines des complexes 90, 40 et 92 placées dans les trois moyens d'alimentation 100, 200, 300, sont référencées respectivement 104, 204, 304.

Le complexe quatre couches 90 issu de la bobine 104 est guidé vers le module de complexage C par des rouleaux 110, 112, 114.

En aval de la sortie de bobine 104, le module 100 comprend un ensemble de dépelliculage 120 conçu pour retirer la pellicule 81 située côté face à complexer, sur l'électrolyte 50. Cet ensemble de dépelliculage 120 est positionné entre les rouleaux de renvoi 112 et 114.

La structure de complexe trois couches 50, 60, 80 obtenue en sortie de l'ensemble de dépelliculage 120 est illustrée sur la figure 10.

Par ailleurs, le moyen d'alimentation 100 comprend entre l'ensemble de dépelliculage 120 et le module de complexage C un module de chauffage 130. La structure et la fonction de celui-ci seront décrites plus en détail par la suite.

De manière similaire, le complexe cinq couches 92 issu de la bobine 304 est guidé vers le module de complexage C par des rouleaux 310, 312, 314.

En aval de la sortie de bobine 304, le module 300 comprend un ensemble de dépelliculage 320 conçu pour retirer la pellicule 82 située côté face à complexer, sur l'électrolyte 30. Cet ensemble de dépelliculage 320 est positionné entre les rouleaux de renvoi 312 et 314.

La structure de complexe quatre couches 83, 10, 20, 30 obtenue en sortie de l'ensemble de dépelliculage 320 est illustrée sur la figure 14.

Par ailleurs, le moyen d'alimentation 300 comprend entre l'ensemble de dépelliculage 320 et le module de complexage C un module de chauffage 330. La structure et la fonction de celui-ci seront décrites plus en détail par la suite.

L'ensemble d'alimentation 200 destiné à l'alimentation d'un film d'anode, de préférence à base de lithium, comprend deux rouleaux d'alimentation 240, 250, de pellicules respectives 84, 85.

Les pellicules 84, 85 et le film d'anode 40 sont guidés par des rouleaux 210, 212, vers un ensemble d'application primaire 260. Cet ensemble 260 a pour fonction de réunir sous forme d'un élément comprenant la couche d'anode 40 prise en sandwich entre les deux pellicules 84, 85, ces films initialement distincts provenant des bobines d'alimentation respectives 204, 240 et 250.

L'élément comprenant les deux pellicules 84 et 85 encadrant l'anode 40, est illustré sur la figure 12.

L'ensemble d'application 260 est formé de préférence de deux rouleaux pinceurs 262, 264 montés à rotation autour d'axes respectifs parallèles, recevant entre eux à défilement les trois films précités 84, 40, 85. De préférence, l'un 262 des rouleaux a son axe de rotation fixe dans l'espace, tandis que le second rouleau 264 placé en regard, qui sert de rouleau presseur, est sollicité à déplacement contre le rouleau 262 premier cité, sous un effort contrôlé, par exemple à l'aide de moyens élastiques, tels qu'une lame élastique 263.

Par ailleurs l'un au moins des deux rouleaux 262, 264 est motorisé. Il est contrôlé pour alternativement, entraîner par traction l'élément 84, 40, 85 , et freiner cet élément, en synchronisation avec le process aval. A ce titre les rouleaux 262, 264 sont asservis en esclave sur les moyens du processus aval.

Le cas échéant l'un au moins des rouleaux 262, 264 est monté sur un équipage escamotable, par exemple piloté par un vérin, pour permettre de séparer les deux rouleaux 262, 264 et faciliter ainsi la mise en place initiale de l'élément 84, 40, 85 entre ceux-ci.

En aval de l'ensemble d'application 260, le moyen d'alimentation 200 comprend un module 270 de sectionnement transversal de la couche d'anode 40.

A cette fin, le module de sectionnement 270 comprend un système de marteau 272 et d'enclume 274 disposés respectivement de part et d'autre du chemin de déplacement de l'élément 84, 40, 85. Le marteau 272 opère par frappe linéaire transversale au travers des pellicules de protection 84, 85.

L'un au moins du marteau 272 ou de l'enclume 274, de préférence le marteau 272, comprend une arête contondante.

Le marteau 272 est sollicité séquentiellement à la frappe contre l'enclume 274 pour délimiter dans le film initial 40 d'anode, une longueur avale correspondant à l'enroulement recherché. On notera que le marteau 272 opère sur l'élément comprenant l'anode 40 prise en sandwich entre les deux pellicules 84, 85. Cependant, les pellicules 84, 85 sont formées d'un matériau apte à résister à la frappe du marteau 272 pour éviter toute rupture des pellicules 84, 85.

Les deux pellicules 84, 85 sont retirées de l'élément précité illustré sur la figure 12, en sortie du module de sectionnement 270 par des moyens de dépelliculage 220, 225. Le cas échéant ces moyens de dépelliculage 220, 225 peuvent être formés par le marteau 272 et l'enclume 274 eux mêmes.

Le tronçon de l'anode 40 situé en avant de la ligne de rupture définie par le module 270 est entraîné par les moyens d'entraînement situés en aval, ce tronçon d'anode 40 étant lui-même pris en sandwich entre les deux ensembles 50, 60, 80, d'une part, et 83, 10, 20, 30, d'autre part, dans le module de complexage C.

Le tronçon du film d'anode 40 situé en amont de la ligne de rupture est quant à lui entraîné par les pellicules 84, 85, puisque celles-ci, comme indiqué précédemment, ne sont pas sectionnées dans le module 270.

On notera sur ce point que l'ensemble des pellicules 80, 81, 82, 83, 84 et 85, a non seulement pour fonction d'éviter une pollution des faces externes de complexe par l'environnement extérieur et d'empêcher le collage des complexes sur les différents rouleaux impliqués, mais de plus participe à l'entraînement de leur complexe associé.

Les pellicules 80, 81, 82, 83, 84 et 85 sont avantageusement à base de PP (polypropylène), PE (polyéthylène), PET (polyéthylène téréphtalate) ou analogue.

Lorsque celles-ci sont retirées, elles le sont le plus loin possible sur leur trajectoire, de sorte que le film associé ne passe jamais nu sur un rouleau de son parcours, afin d'éviter la pollution à la fois du film et du rouleau.

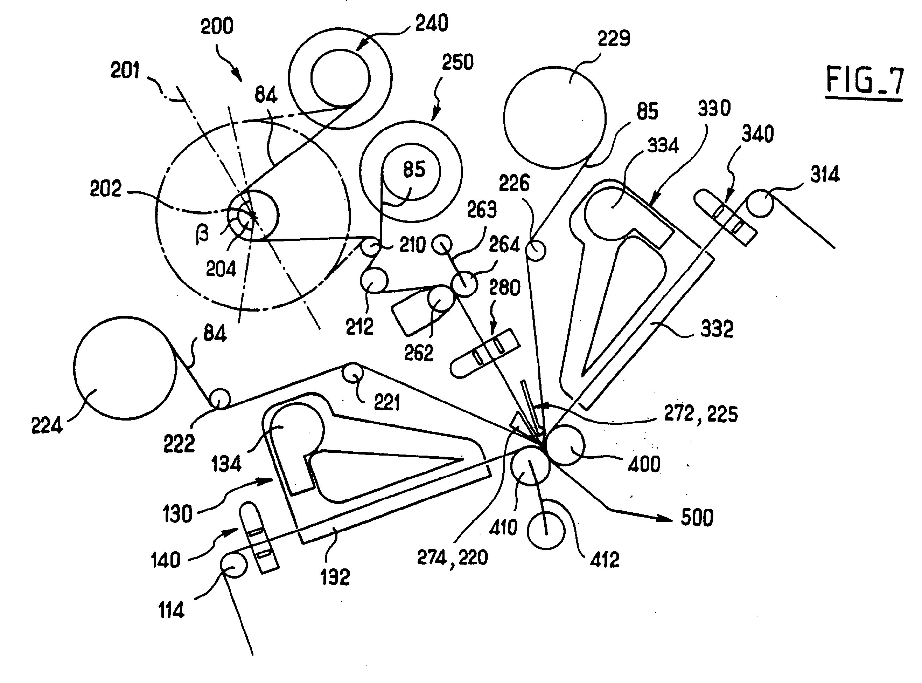

On notera par ailleurs que les deux dérouleurs de pellicule 240, 250 associés au dérouleur d'anode 204 sont sensiblement adjacents et que la pellicule 84 issue du dérouleur 240 entoure le rouleau d'anode 204 sur un arc d'enroulement (« embarrage » selon l'expression consacrée) important (typiquement supérieur à 90° et préférentiellement au moins égal à 270°) pour à la fois assurer une bonne protection de ce film fragile et garantir un entraînement mécanique adéquat. Cet arc d'enroulement de l'anode 204 par la pellicule 84 est référencé β sur la figure 7 annexée. Il varie en fonction du rayon de la spire externe de film présent sur le dérouleur 240.

La commande séquentielle d'une part, de l'entraînement des pellicules 84 et 85, et par conséquent du tronçon d'anode 40 situé en amont de la ligne de rupture, et d'autre part, de l'entraînement des pellicules 80 et 83 et par conséquent du tronçon d'anode situé en aval de cette ligne de rupture, est de préférence adaptée pour définir un intervalle, par exemple de l'ordre de 20mm entre les deux tronçons précités, après rupture. Plus précisément la frappe de l'outil 272 est synchronisée avec l'arrêt en frein des rouleaux pinceurs 262, 264 de façon à créer une interruption de défilement du lithium 40 pendant que le complexage continue en aval à la même vitesse.

On évite ainsi, grâce à la pré-rupture de la couche d'anode 40, d'avoir à couper en aval, simultanément, toutes les couches composant le complexe final, ce qui risquerait de pincer toutes les couches entre elles et pourrait entraîner des courts-circuits entre l'anode 40, les cathodes 20, 60 et le collecteur 10.

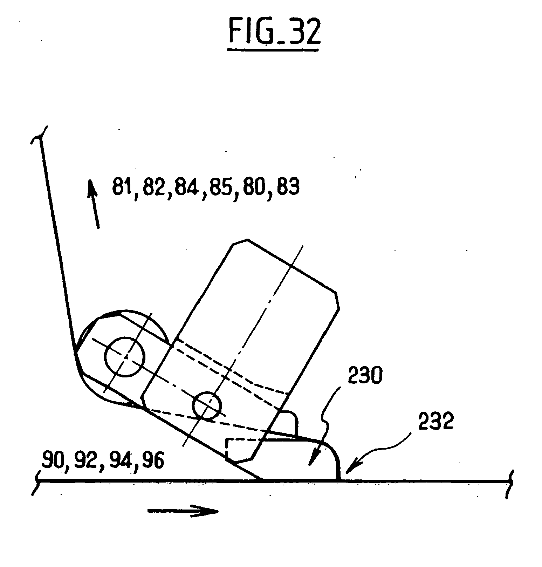

Pour éviter de détériorer l'interface adjacente aux pellicules, notamment par arrachement, lors du retrait de celles-ci, de préférence le dépelliculage, au niveau des postes 120, 220, 225 et 320 précités, est réalisé à l'aide d'un système racleur 230 schématisé sur la figure 32, disposé tangentiellement au film concerné et doté d'une arête polie 232 presque vive, adapté pour assurer un pelage de la pellicule grâce à une déviation brutale de celle-ci d'au moins 60° (voir figure 32), le cas échéant avec retournement sur elle-même de celle-ci sensiblement à 180°, selon un rayon de courbure faible (typiquement un rayon proche de 0,05mm). Le racleur 230 est formé d'une lame statique à arête émoussée 232 proche du plan de déplacement, en amont, du film qui porte la pellicule. L'arête 232 à sa convexité dirigée vers l'aval du déplacement du film.. Les inventeurs ont en effet déterminé qu'un tel pelage permettait de préserver la surface du complexe adjacent alors qu'un arrachement de la pellicule sans précaution détériore généralement celle-ci. Le racleur précité 230 permet en effet un décollement de la pellicule par effet de cisaillement entre le film fonctionnel et la pellicule de protection. En tirant la pellicule de protection autour de l'arête 232 du racleur 230, on crée un allongement de la courbure extérieure de la couche de pellicule de protection, ce qui crée localement une force tangentielle sur la dite couche, un micro-étirage de la pellicule et un effet de glissement de la couche de pellicule sur le film fonctionnel, évitant ainsi l'arrachement de particules du produit fonctionnel.

De préférence, le dispositif comprend également des moyens de réglage de l'effort de traction exercé sur la pellicule de protection lorsque celle-ci est déviée sur l'arête émoussée 232 du racleur 230.

Sur la figure 1, le système racleur des ensembles de dépelliculage 120, 320, sont référencés 122, 322.

Les pellicules 81, 82, 84 et 85, retirées sur les postes 120, 320, 220 et 225, sont dirigées vers des rouleaux respectifs 124, 324, 224 et 229. A cette fin, les pellicules 84 et 85, sont guidées par des rouleaux 221, 222, d'une part, et 226 d'autre part.

Les moyens de chauffage 130 et 330 ont pour fonction de porter à température contrôlée la surface externe d'interface des électrolytes 50 et 30 avant que ceux-ci ne soient portés au contact de la couche d'anode 40 dans l'ensemble de complexage C, pour permettre par la suite une bonne adhérence entre les couches d'électrolyte 50 et 30 et l'anode 40. De préférence, ces moyens de chauffage 130 et 330 sont formés de fours à montée en température rapide et à descente en température rapide, aptes à opérer un balayage d'air chaud, par une circulation forcée en boucle et régulée d'air chaud, sur les interfaces précitées. Typiquement, les moyens de chauffage 130 et 330 sont conçus pour diffuser de l'air comprimé thermostaté, à la précision du °C, par exemple à 60°C, sur les interfaces d'électrolytes 50 et 30.

Plus précisément encore, l'ensemble du dispositif conforme à la présente invention comprenant des phases séquentielles d'interruption de déplacement des films d'alimentation en amont du module d'enroulement E, pour permettre la coupe du complexe, l'évacuation successive de chaque enroulement, et le réengagement d'un élément suivant, de préférence les fours 130 et 330 sont également pilotés de manière séquentielle. C'est-à-dire que la diffusion d'air chaud, dans les fours 130 et 330 est interrompue cycliquement lors de l'arrêt du défilement des complexes, afin d'éviter une montée en température néfaste de la portion des complexes située dans ces fours. Une surexposition à la chaleur de ces tronçons de films pourraient en effet altérer la qualité du complexe final.

Par ailleurs pour éviter une montée en température intempestive des tronçons de film stagnant dans les fours, pendant les phases d'arrêt, les moyens de chauffage 130, 330 peuvent comporter des moyens aptes à insuffler séquentiellement un jet d'air frais comprimé sur les films. Ces moyens sont adaptés typiquement pour ramener la température à l'intérieur des fours à une valeur de l'ordre de 40°C.

De préférence les fours 130, 330 sont formés d'un circuit en boucle. Sur les figures on a référencé 132, 332, les tronçons de ces fours dans lesquels circulent les films multicouches et 134, 334 des ventilateurs assurant séquentiellement la soufflerie d'air chaud et d'air froid. Pour assurer le chauffage, de préférence des éléments chauffants constitués de multifils nus électriquement conducteurs sont placés en regard de la sortie des ventilateurs 134, 334.

On a repéré sur la figure 1 sous les références IX, X, XI, XII, XIII, XIV, XV et XVI respectivement la localisation sur le trajet du dispositif des différents complexes illustrés sur les figures 9, 10, 11, 12, 13, 14, 15 et 16.

Il est important de contrôler le positionnement relatif des bords latéraux longitudinaux des différents films 10, 20, 30, 40, 50 et 60 formant le complexe issu de l'ensemble C, afin d'éviter des contacts électriques parasites entre ces différentes couches.

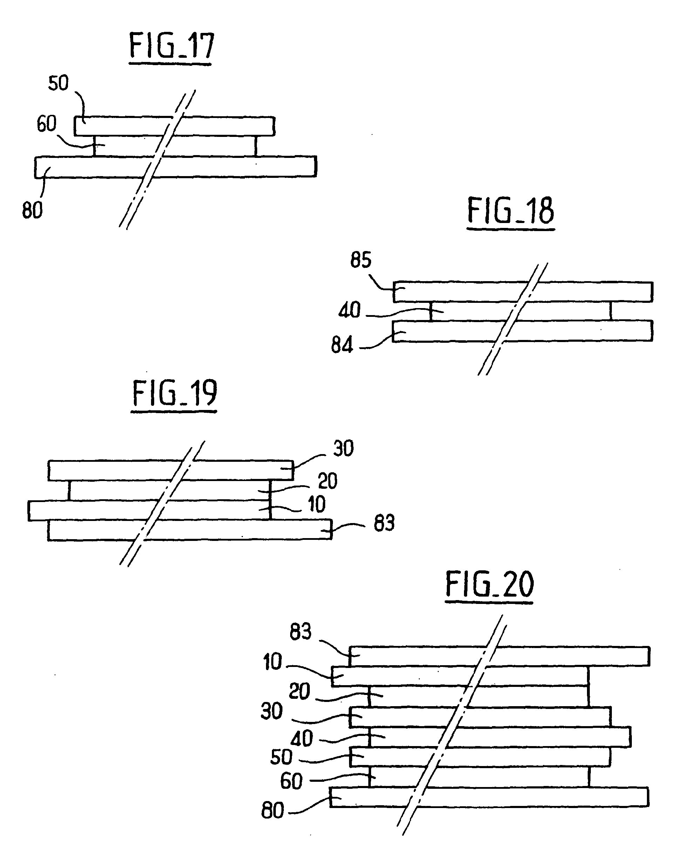

On a représenté sur la figure 17 le positionnement relatif des bords longitudinaux de la pellicule 80, de la cathode 60 et de l'électrolyte 50 en aval du poste de dépelliculage 120. On notera que la cathode 60 possède une largeur inférieure à l'électrolyte 50, que ce dernier déborde de part et d'autre de la cathode 60, que la pellicule 80 possède une largeur supérieure à l'électrolyte 50 et qu'elle déborde de part et d'autre de celui-ci.

On a représenté sur la figure 18, le positionnement relatif des bords longitudinaux des pellicules 84, 85, et de l'anode 40. On notera que l'anode 40 possède une largeur inférieure aux deux pellicules 84, 85, lesquelles peuvent posséder des largeurs identiques et que les pellicules 84, 85, débordent de part et d'autre de l'anode 40.

On a représenté sur la figure 19, le positionnement relatif de la pellicule 83, du collecteur 10, de la cathode 20 et de l'électrolyte 30. On notera que la cathode 20 possède une largeur inférieure au collecteur 10, qu'un premier bord de la cathode 20 affleure un premier bord du collecteur 10, que l'électrolyte 30 possède une largeur supérieure à la cathode 20, qu'elle déborde de part et d'autre de celle-ci, que l'électrolyte 30 déborde par rapport au premier bord de la cathode 20 et du collecteur 10, mais que le second bord de l'électrolyte 30 est située en retrait du collecteur 10, que la pellicule 83 a un premier bord qui déborde par rapport au premier bord de l'électrolyte 30 mais possède un second bord qui affleure le second bord de l'électrolyte 30.

Enfin, on a représenté sur la figure 20, le positionnement relatif de la pellicule 80, de la cathode 60 de l'électrolyte 50, de l'anode 40, de l'électrolyte 30, de la cathode 20, du collecteur 10 et de la pellicule 83, en sortie du module de complexage C.

On notera que les bords des électrolytes 50 et 30 sont superposés, l'anode 40 ayant un bord en retrait des électrolytes 50 et 30 sur le côté émergeant du collecteur 10, tandis que l'anode 40 dépasse des électrolytes 30, 50 sur le côté opposé.

On a référencé XVII, XVIII, XIX et XX sur la figure 1, la localisation des complexes représentés respectivement sur les figures 17, 18, 19 et 20.

Le positionnement relatif des couches représenté sur les figures 17 et 18 est assuré lors de la réalisation des bobines d'alimentation 104 et 304. Le positionnement relatif représenté sur la figure 19 est assuré lors du pelliculage dans le module 260. Le positionnement relatif représenté sur la figure 20 est assuré dans le module de complexage C.

Afin de définir le positionnement relatif (que l'on peut également qualifier « d'alignement relatif ») nécessaire entre les deux sous-ensembles représentés sur les figures 17 et 19 et la couche d'anode 40, il est prévu de préférence des moyens aptes à détecter le positionnement des bords longitudinaux des complexes respectifs en amont de l'ensemble de complexage C et des moyens aptes à déplacer ces complexes, par rapport à un référentiel commun, en amont du module de complexage C, pour obtenir le positionnement relatif souhaité. De préférence, ces moyens de déplacement agissent sur les moyens d'alimentation 100, 200 et 300. A cette fin, de préférence, chacun de ces moyens d'alimentation 100, 200 et 300 est monté sur une platine individuelle susceptible de déplacement contrôlé par rapport au bâti support général 900 du dispositif. Plus précisément encore, de préférence, chacune de ces platines est montée à pivotement autour d'un axe respectif 101, 201, 301 et associée à un moyen de déplacement contrôlé.

Les moyens de détection de positionnement des bords des complexes sont formés de préférence de moyens optiques, le cas échéant infra-rouge ou laser, ou de moyens ultrasons, disposés sur une fourche à deux éléments émetteur/récepteur disposés respectivement de part et d'autre du trajet de déplacement du multicouche.

Sur la figure 1 on a référencé 140 un tel moyen de détection associé au complexe issu des moyens 100, 280 le moyen équivalent de détection associé au complexe issu des moyens 260 et 340 le moyen équivalent de détection associé au complexe issu des moyens 300. Le moyen de détection 140 est placé entre le rouleau 114 et le four 130. Le moyen de détection 340 est placé entre le rouleau 314 et le four 330. Le moyen de détection 280 est placé entre le module primaire de complexage 260 et le module de complexage C.

Les moyens de déplacement précités peuvent être formés de moyens à base de vérins pneumatiques ou tous moyens équivalents.

De préférence, chacune des platines précitées porte un moyen d'amortissement apte à reposer contre le bâti commun précité 900 pour éviter toute vibration du dispositif. A titre d'exemple non limitatif, ces moyens d'amortissement peuvent être formés de ventouses.

Les axes de pivotement précités 101, 201 et 301 sont de préférence parallèles à la platine 900. Ils passent par le centre (axe de rotation 102, 202, 302) des dérouleurs 104, 204, 304 et par un plan médian de la largeur de la bobine placée sur le dérouleur. Ils sont par ailleurs parallèles aux tronçons de films multicouches respectifs associés, situés immédiatement en amont de l'ensemble de complexage C, imposés par les rouleaux 114, 262 et 314.

A cet égard on notera que le tronçon du film d'anode 40 situé en amont du module de complexage C, guidé par le rouleau 262, est situé sensiblement selon la bissectrice de l'angle formé par les tronçons des complexes 90 et 92 issus respectivement des dérouleurs 104 et 304, en amont du module de complexage, tels que guidés par les rouleaux 114 et 314. Plus précisément encore, en amont du module de complexage, les complexes 90 et 92 font entre eux un angle de l'ordre de 150° et le film d'anode 40, situé selon leur bissectrice est sensiblement à 75° de chacun de ces deux complexes 90 et 92.

De même de préférence, l'anode 40 est située, en amont du module de complexage C, sensiblement selon la bissectrice des tronçons des pellicules 84 et 85 situés en aval des dépelliculeurs 220 et 225, lesquels tronçons de pellicules 84 et 85 font entre eux un angle de l'ordre de 60°.

Les rouleaux de renvoi 110, 112, 114, 221, 222, 226, 310, 312 et 314 permettent de disposer les chargeurs 104, 204 et 304 dans des positions éloignées, et de rapprocher les tronçons de complexe impliqués, en amont du module de complexage C de sorte que l'angle complet formé entre ceux-ci, au niveau du module de complexage, soit inférieur à 180°.

On notera que les moyens de positionnement relatif précités des complexes de base ont non seulement pour fonction de garantir une connectique électrique satisfaisante dans le produit final, et notamment une protection des cathodes par débordement de l'électrolyte, pour éviter les courts-circuits, mais également d'optimiser la surface active en fonctionnement, dans une largeur de complexe la plus faible possible.

Les rouleaux de réception des différents ensembles de dépelliculage 124, 224, 229, 324, 520 et 522 comprennent de préférence des enrouleurs motorisés.

De même les dérouleurs 104, 204 et 304 sont de préférence motorisés et paramétrés pour maîtriser la force de traction, constante sur les films multicouches impliqués. Il est en effet important de maintenir constante la traction exercée sur les films pour avoir une reproductibilité dans la réalisation des éléments.

Les moteurs ainsi associés aux dérouleurs 104, 204 et 304 sont commandés alternativement en moteur, à l'origine d'un enroulement de complexe, puis en frein lorsque l'entraînement du complexe est pris en charge par des moyens aval.

On notera en particulier que dans ce contexte, les moteurs des différents dérouleurs 104, 204, 304 et dépelliculeurs 124, 224, 229, 324, 520 et 522, sont contrôlés par une unité centrale programmée pour faire évoluer de manière adéquate les efforts moteurs et les efforts de freinage respectifs requis en prenant en compte l'évolution du diamètre de films déroulés et respectivement du diamètre de pellicule enroulée.

Ces diamètres peuvent être soit calculés par l'unité centrale, à partir de la longueur respective de complexe et de pellicule traitée, soit mesurée à l'aide de capteurs adéquats, par exemple à ultrasons, équipant respectivement chacun des dérouleurs et enrouleurs concernés 104, 204, 304, 124, 224, 229, 324, 520 et 522.

L'ensemble de complexage C comprend de préférence deux rouleaux pinceurs 400, 410, montés à rotation autour d'axes parallèles et entre lesquels est acheminé l'empilage formé des couches superposées : pellicule 80, cathode 60, électrolyte 50, anode 40, électrolyte 30, cathode 20, collecteur 10 et pellicule 83.

Les deux rouleaux pinceurs 400, 410 sont sollicités en rapprochement relatif sous un effort contrôlé.

Ils exercent donc un effort de pression contrôlé sur les films acheminés entre ces rouleaux 400, 410. A cette fin, de préférence, l'axe de rotation du rouleau 400 est fixe tandis que l'axe de rotation du rouleau 410 est monté sur un équipage sollicité à déplacement vers le rouleau 400 précité sous un effort contrôlé, par exemple par un organe élastique telle qu'une lame 412. De préférence le rouleau 410 est également monté sur un équipage escamotable piloté par un moyen d'entraînement, par exemple un vérin, pour assurer sur commande le dégagement du rouleau 410 et faciliter la mise en place du complexe.

On retrouve ainsi en sortie de l'ensemble de complexage C l'empilement illustré sur les figures 15 et 20.

Le cas échéant les rouleaux de complexage 400, 410 peuvent être chauffants. Leur diamètre est typiquement au moins égal à 20 mm.

Le dispositif conforme à la présente invention comprend en outre entre le module de complexage C et le module d'enroulement E, un ensemble 500 à fonctions multiples et ayant notamment pour fonction 1) de contrôler le débit (longueur) de complexe, dans un module 510, 2) de réaliser des coupes longitudinales localisées dans le collecteur 10, au niveau d'un module 520, 3) d'assurer alternativement l'entraînement du complexe au début d'un enroulement puis le freinage de ce complexe lorsque celui-ci est placé en traction par le mandrin 610, au niveau d'un module 530, 4) de retirer les pellicules 80 et 83, dans un module 540, 5) de sectionner les couches 10 à 60 de l'empilement fonctionnel après défilement d'une longueur correspondant à l'enroulement souhaité, dans un module 550 et 6) de chauffer les faces externes de l'empilement résultant à la fin d'un enroulement, au niveau d'un module 560.

Le dispositif de détection 510 est destiné à piloter une correction des défauts de synchronisation pouvant résulter de microglissements du complexe sur les rouleaux 400, 410, afin d'assurer une vitesse constante d'alimentation de l'enrouleur E.

A titre d'exemple non limitatif, un tel dispositif de détection 510 peut être formé d'un rouleau de synchronisation 512 monté sur un levier pivotant 514 et sollicité en appui contre le complexe en défilement par un vérin pneumatique ou tout moyen équivalent, et associé à un codeur absolu 516.

Le complexe est plaqué contre le rouleau 512 par un rouleau 518 placé en amont sur le chemin de déplacement du complexe.

Le module de coupe 520 est destiné à réaliser un refendage linéaire séquentiel, en sens longitudinal, sur le bord du collecteur 10. Sur les figures annexées les tronçons de coupe résultant sont référencés 521. Chaque tronçon 521 a une longueur L1 sensiblement égale, tout en étant légèrement inférieure, à une demie circonférence d'enroulement sur le mandrin 610. L'actionnement de ce dispositif 520 est piloté de sorte que les refendages 521 se retrouvent tous superposés sur une même face de l'élément final bobiné. En d'autres termes ces refendages 521 sont opérés avec un pas P1 identique à la longueur de chaque spire réalisée sur le mandrin 610. Dans la mesure où cette longueur est variable et croissante, en raison de l'épaisseur accumulée sur le mandrin 610, de préférence le pas des refendages 521 est également variable.

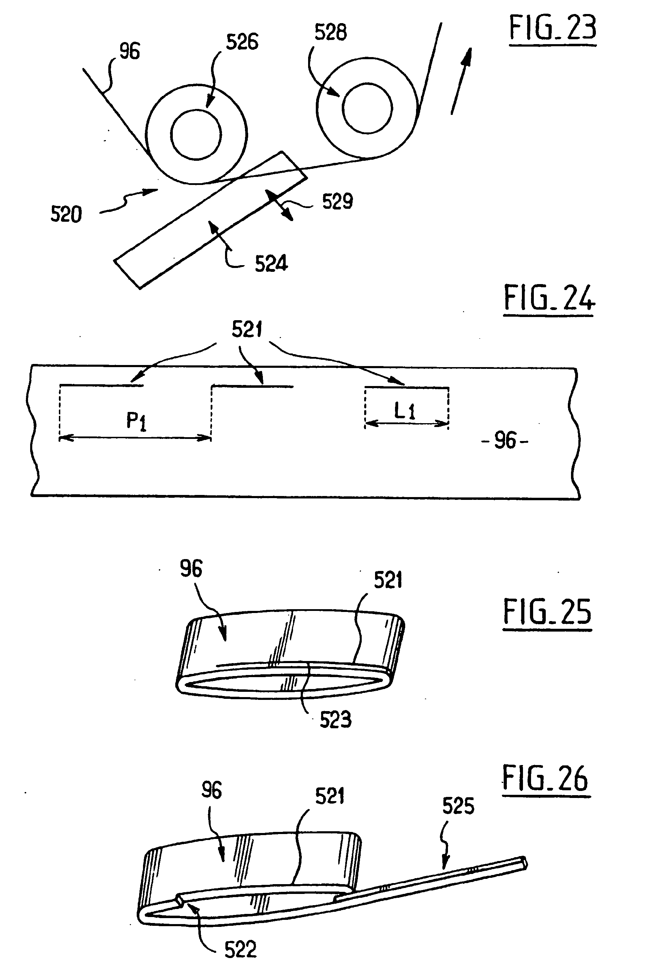

Comme on l'a illustré schématiquement sur la figure 26 annexée, au niveau du poste de conformation finale 700, un segment de découpe transversale 522 est opéré entre une extrémité axiale de la découpe précitée 521 et le bord libre adjacent du collecteur 10, puis la bande latérale externe 523 ainsi délimitée dans le collecteur 10 est déployée vers l'extérieur de l'élément enroulé, pour servir de connecteur sur le concentrateur de courant. Sur la figure 26 la partie de bande de collecteur 10 ainsi déployée est référencée 525.

Le dispositif de refendage 520 est de préférence de type « coupe en l'air ». Il comprend une lame de refendage oscillante 524 adaptée pour venir sectionner localement et séquentiellement le collecteur 10, entre deux rouleaux 526 et 528 servant d'appui au complexe. Sur la figure 23 le mouvement de pivotement de la lame 524 est schématisé sous la référence 529.

Le module d'entraînement 530 comprend de préférence deux rouleaux pinceurs 532, 534, entre lesquels chemine l'ensemble complexe illustré sur les figures 15 et 20. Ces deux rouleaux 532, 534, sont associés à des motorisations respectives. Lors de l'acheminement de l'extrémité avant du complexe vers le mandrin 610, les rouleaux 532, 534, sont pilotés en mode moteur d'entraînement. En revanche, une fois l'extrémité avant du complexe saisie par le mandrin 610, celui-ci devient moteur, et les rouleaux 532, 534, sont pilotés, par leur moteur respectif, en mode de freinage. On garantit ainsi un placage étroit du complexe sur le mandrin 610. Ces deux rouleaux pinceurs 532, 534 sont situés à proximité du mandrin enrouleur 610, en amont de celui-ci.

L'entraînement des rouleaux pinceurs 400, 410 est asservi sur celui des rouleaux pinceurs 532, 534 qui opèrent en maître, par rapport aux rouleaux esclaves 400, 410.

L'un au moins des rouleaux 532, 534 est associé à un moyen de sollicitation tel que les rouleaux 532 et 534 exercent sur le complexe qu'ils encadrent, un effort de pincement contrôlé.

Par ailleurs de préférence, l'un au moins des rouleaux 532, 534, par exemple le rouleau 534, est monté sur un équipage escamotable 535, par exemple piloté par un vérin 536, pour faciliter l'insertion du complexe entre les rouleaux 532 et 534.

Le retrait des pellicules 80 et 83 est opéré, dans le module 540, à l'aide de racleurs 541, 543 similaires aux racleurs 122 et 322 précités. Les pellicules 80 et 83 sont dirigées, après dépelliculage, grâce à des rouleaux 542, 544 sur des rouleaux d'accumulation 546, 548. Ceux-ci sont motorisés, comme indiqué précédemment.

Le sectionnement transversal complet de l'empilement des 6 couches résultantes 10, 20, 30, 40, 50 et 60 du complexe est opéré, juste en aval des lames de dépelliculage 541, 543, dans le module 550, par tous moyens appropriés.

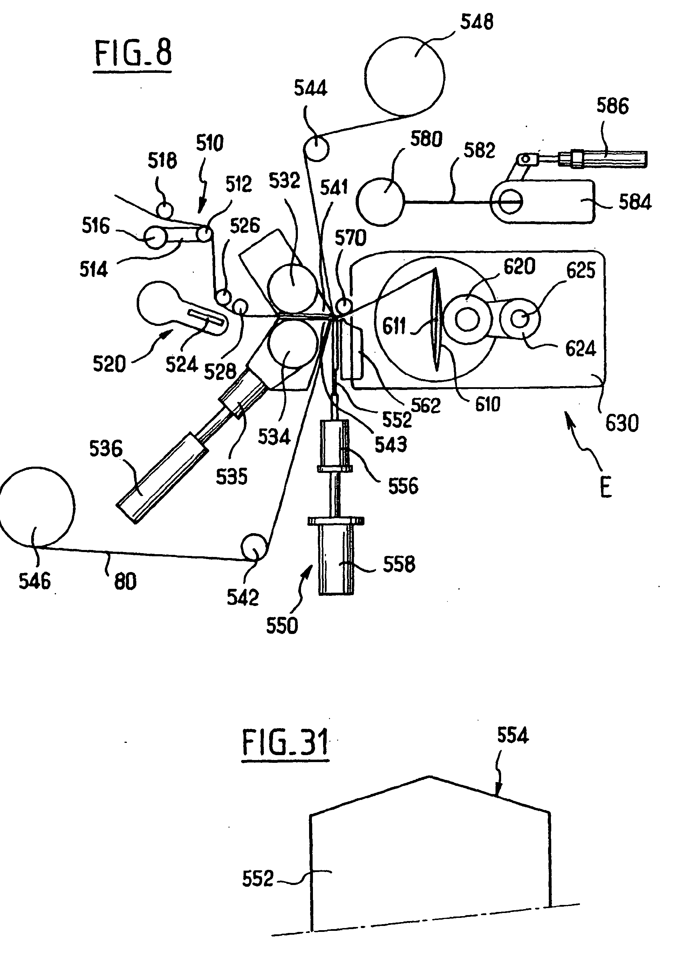

De préférence ces moyens de coupe 550 comprennent une lame 552 comprenant un bord tranchant 554 formé d'un dièdre convexe à deux pentes symétriques (voir figure 31) animée d'une vitesse rapide de déplacement, sous faible course lorsque la coupe est requise.

Les déplacements de la lame de coupe 552 sont pilotés par un moyen 556 formé de préférence d'un vérin. Par ailleurs la lame de coupe 552 est de préférence placée sur un équipage escamotable piloté par un moyen de déplacement spécifique, par exemple un second vérin 558, pour permettre d'escamoter la lame de coupe sur demande, afin de faciliter la mise en place du complexe, ou toute autre intervention de maintenance requise.

En variante ces moyens de coupe peuvent être formés d'un système marteau/enclume similaires à celui précédemment décrit sous les références 272, 274.

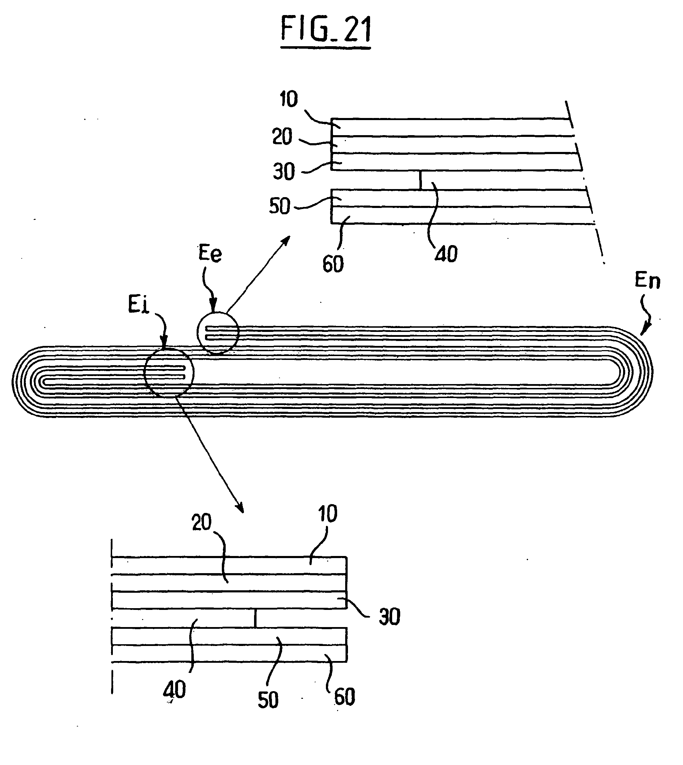

La coupe opérée par le moyen de coupe 552 est opérée sensiblement au milieu de l'intervalle formé dans la couche d'anode en lithium 40, au niveau du poste de frappe 572/574. Ainsi comme on le voit sur la figure 21, la couche d'anode 40 est placée en retrait des autres couches composant l'enroulement, tant au niveau de l'extrémité avant que de l'extrémité arrière de l'enroulement.

Par ailleurs comme on le voit sur la figure 21, de préférence les deux extrémités axiales Ei, Ee de l'enroulement fini En ne sont pas superposées. En d'autres termes l'extrémité externe Ee de l'enroulement est interrompue en deçà de l'extrémité interne Ei, pour éviter une surépaisseur à ce niveau. Ainsi l'enroulement fini aplati présente globalement une épaisseur identique sur toute son étendue.

Le chauffage des faces externes de l'empilement est opéré par tous moyens appropriés dans le module 560, par exemple par soufflage d'air chaud pulsé ou passage sur un rouleau chauffant.

Ce chauffage est de préférence assuré par une barre escamotable de soufflage d'air chaud 562 située immédiatement en aval du dispositif de coupe 550, pour chauffer une bande transversale du complexe, afin de préparer le thermo-collage de la fin de l'enroulement.

On va maintenant décrire les moyens d'enroulement E conformes à l'invention.

Ceux-ci comprennent principalement un mandrin 610 monté à rotation autour d'un axe 611.

Le mandrin 610 présente une section droite, transversale à son axe de rotation 611, non circulaire de révolution. Le mandrin 610 est sensiblement plat. Il a une section générale en fuseau. Typiquement le rapport entre un grand axe et un petit axe de sa section droite est supérieur à 3, préférentiellement supérieur à 5 et très avantageusement supérieur à 10. Il possède avantageusement une section droite généralement elliptique.

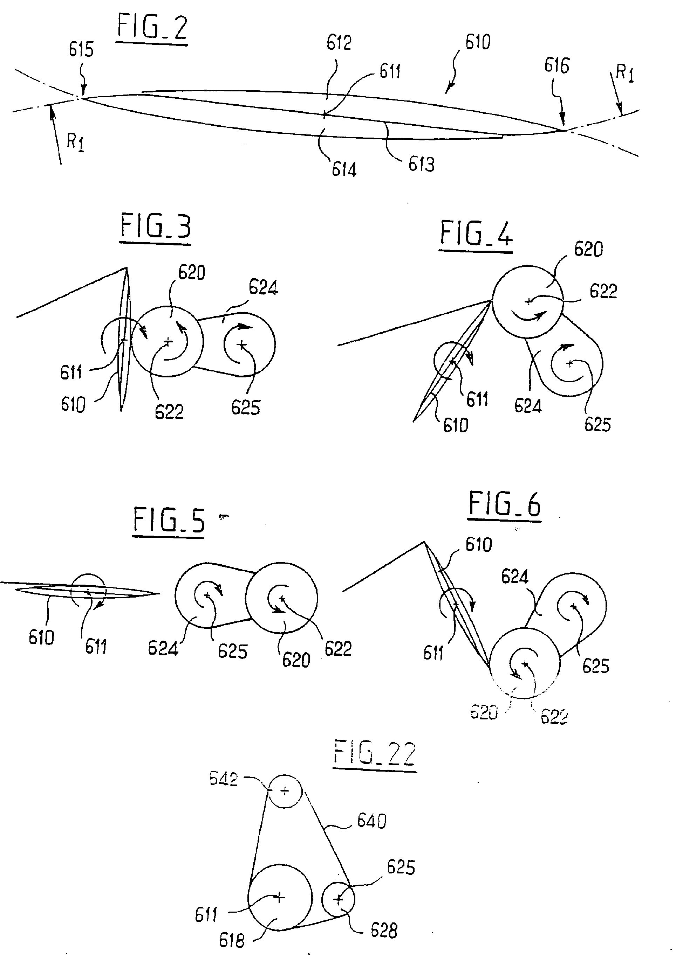

Plus précisément, l'enveloppe externe du mandrin 610 est de préférence délimitée par deux secteurs de cylindre de révolution convexes ayant des rayons identiques (R1 sur la figure 2), mais des axes parallèles éloignés ; par ailleurs cette enveloppe externe délimitant la section droite du mandrin possède des extrémités émoussées 615, 616 à faible rayon.

Le mandrin 610 a une longueur (considérée parallèlement à son axe de rotation 611) supérieure à la largeur des complexes à enrouler.

Plus précisément encore, de préférence, le mandrin 610 est formé de deux mors 612, 614, symétriques et complémentaires. L'interface entre les deux mors 612, 614, c'est-à-dire la face d'appui mutuelle entre ceux-ci, en position d'enroulement, référencée 613 sur les figures est de préférence plane et relie les deux surfaces courbes d'enveloppe externe convexe du mandrin à distance des extrémités effilées de l'ellipse d'enveloppe externe.

A titre d'exemple non limitatif, le grand axe du mandrin 610, formé par les deux mors 612 et 614 accolés, est de l'ordre de 12 cm tandis que le petit axe du mandrin 610, formé par les deux mors 612 et 614 accolés, est de l'ordre de 9 à 10 mm, l'angle formé entre le plan oblique qui correspond à l'interface 613 entre les deux mors 612, 614 et le grand axe du fuseau est typiquement de l'ordre de 2,5°, le fuseau est terminé, sur les extrémités 615, 616 du grand axe, par des arcs de cercle de l'ordre de 0,15mm de rayon, et la distance séparant les centres des surfaces principales cylindriques du mandrin est supérieure à 6 fois leur rayon R1.

Les deux mors 612, 614, sont associés à des moyens d'entraînement, par exemple des vérins hydrauliques ou équivalents adaptés pour assurer sur commande un déplacement relatif contrôlé des deux mors entre une première position dans laquelle les deux mors 612, 614, sont écartés pour permettre l'insertion de l'extrémité avant d'un empilement complexe 10 à 60 à enrouler et une seconde position dans laquelle les deux mors 612, 614, sont accolés pour permettre l'enroulement de l'empilement complexe précité.

Le mandrin 610 formé par la coopération des deux mors 612, 614, est lui-même entraîné à rotation autour de son axe 611, à vitesse non constante, selon des modalités qui seront définies par la suite.

Le mandrin 610 est associé à un rouleau presseur 620.

Celui-ci est monté libre de rotation autour de son axe 622 sur l'extrémité d'un bras rotatif 624.

Le bras 624 est animé d'un mouvement rotatif autour d'un axe 625 excentré par rapport à l'axe 622, et selon une vitesse double de celle du mandrin 610, de telle sorte que le rouleau 620 roule successivement sur chacune des faces du mandrin 610, plus précisément sur l'empilement complexe 10 à 60 enroulé sur celui-ci, afin de le presser régulièrement et d'éviter toute formation de plis dans l'empilement. Le bras 624 est de préférence entraîné en rotation mécaniquement par la rotation du mandrin 610 avec un rapport multiplicateur égal à 2.

Le mandrin 610 et le bras 624 tournent dans le même sens de rotation.

La cinématique de déplacement du mandrin 610 et du rouleau 620 est schématisée sur les figures 3 à 6 associées.

A titre d'exemple non limitatif, comme illustré sur la figure 22, le mandrin 610 et le bras 624 peuvent être entraînés par une courroie commune 640 associée à un moteur 642, grâce à des rouleaux respectifs 618, 628 en prise avec ladite courroie commune 640. Pour assurer une vitesse double au bras 624, le rouleau 628 associé à celui-ci possède un rapport d'entraînement deux fois plus faible que le rouleau 618 associé au mandrin 610, soit typiquement une dimension circonférentielle deux fois plus faible.

On notera que le dispositif comprend de préférence en outre, un rouleau 570, en aval de la lame de coupe 552, en regard de la buse de soufflage d'air chaud 562.

Ce rouleau 570 sert d'ultime guidage au complexe formé, avant enroulement sur le mandrin 610.

La génératrice du rouleau 570 sur laquelle s'appuie le complexe, est située dans un plan défini par la génératrice du rouleau amont 534 et la génératrice du mandrin 610 correspondant au petit axe de celui-ci (laquelle génératrice sert d'appui au complexe quand celui-ci est positionné avec son grand axe parallèle au plan précité, comme illustré sur la figure 5).

L'ensemble formé par la combinaison du mandrin 610, du bras 624 et du rouleau presseur 622 est monté sur un tiroir 630 lui-même associé à des moyens d'entraînement propres à déplacer cet ensemble à translation entre une position d'enroulement telle qu'illustrée sur la figure 1, rapproché du module 500 et une position d'évacuation, éloignée de ces moyens 500, une fois la longueur souhaitée d'empilement enroulée sur le mandrin 610, pour faciliter le retrait de l'enroulement obtenu.

Le tiroir 630 précité peut également être déplaçable dans une position initiale additionnelle temporaire, rapprochée des rouleaux pinceurs d'alimentation 532, 534, lorsque ceux-ci sont pilotés en moteur, pour assurer la saisie de l'extrémité avant du complexe au début de l'enroulement. Une fois cette saisie opérée, de préférence le tiroir 630 est écarté des rouleaux pinceurs 532, 534 pour l'enroulement proprement dit.

Pour achever l'enroulement et éviter un flottement de l'extrémité externe arrière du complexe enroulé, le mandrin 610 est de préférence animé d'un mouvement de rotation complet sur 360° après rupture du complexe enroulé et enroulement complet de ce complexe et le rouleau presseur 620 est maintenu en appui sur l'enroulement pendant cette rotation additionnelle afin de parfaire le « collage » de la dernière spire de l'enroulement, grâce au préchauffage précité par les moyens 560. Le cas échéant, ce chauffage peut être complété par un soufflage d'air chaud au niveau du poste d'enroulement E.

On obtient ainsi un collage de la queue de l'enroulement, sans apport de colle.

On notera que le dispositif peut comprendre en outre, comme illustré sur la figure 8, un rouleau presseur additionnel escamotable 580, placé entre le rouleau 570 et le mandrin 610. Un tel rouleau 580 a pour fonction de permettre le blocage du complexe lors de la coupe et le plaquage de la fin de la bande, sur le mandrin 610. Le rouleau 580 est de préférence lié, par une lame élastique 582, à un équipage oscillant 584, piloté par un vérin 586.

Lors du bobinage de l'enroulement de complexe, sur le mandrin 610, le rouleau 580 est placé dans la position illustrée sur la figure 8, écartée du trajet de déplacement du complexe et éloignée du mandrin 610. A la fin d'un enroulement, après coupe du complexe, au contraire, l'équipage oscillant précité et le rouleau 580 associé, sont déplacés de sorte que le rouleau 580 soit plaqué sur la face du mandrin 610 opposée à celle sur laquelle repose le rouleau 620.

Cet enroulement, obtenu sous une forme généralement aplatie, grâce à la géométrie elliptique du mandrin 610 est ensuite retiré du mandrin 610 et évacué grâce à un robot ou tout moyen équivalent adapté vers un poste de pressage 700 destiné à parfaire la planéité de chaque enroulement obtenu.

Un tel robot peut être formé d'un robot pneumatique à pinces de serrage assurant la préhension de l'élément enroulé de stockage d'énergie électrique sur le mandrin 610, son extraction de celui-ci et par divers mouvements de rotations et de translations, la mise en place de l'élément dans le poste de pressage 700.

Pour l'essentiel ce poste de pressage comprend une presse, formé par exemple d'un vérin presseur 710, chargé de la mise à plat finale de l'élément. Celui-ci opère de préférence en temps masqué, pendant qu'un élément suivant est en cours d'enroulement.

Pour faciliter le retrait de l'enroulement obtenu, le dispositif peut comprendre des moyens aptes à assurer pendant une séquence limitée, à la fin de l'enroulement, un déplacement relatif et alternatif à translation entre les deux mors 612 et 614 composant le mandrin 610, selon une direction parallèle à l'interface 613, pour faire ainsi varier la longueur du grand axe du mandrin, afin de « desserrer » légèrement l'enroulement par rapport au mandrin 610, décoller la première spire et dépincer l'accrochage du premier tour.

Chaque enroulement peut ensuite être dirigé vers un magasin pour la réalisation des étapes ultérieures requises pour la connexion sous la configuration série/parallèle souhaitée. Un tel magasin et les moyens mis en oeuvre pour assurer les liaisons requises série/parallèle, ne seront pas décrits plus en détail par la suite.

Comme on l'a indiqué précédemment, selon une caractéristique avantageuse de l'invention, le mandrin 610 est entraîné à rotation à une vitesse angulaire non constante contrôlée de telle sorte que la vitesse linéaire de défilement de l'empilement complexe alimentant le mandrin 610 soit constante.

Grâce à cette caractéristique, l'invention permet de garantir un effort de traction constant sur le complexe et par conséquent un enroulement parfait sur le mandrin 610, exempt de tout pli ou défaut équivalent.

Par ailleurs grâce au défilement à vitesse constante du complexe, on évite toute nécessité de disposer d'un magasin intermédiaire, en amont du module d'enroulement E, pour absorber les à-coups d'accélération - décélération de la bande. Et l'on permet ainsi la réalisation de l'ensemble du dispositif sous forme compact, dans un volume limité.

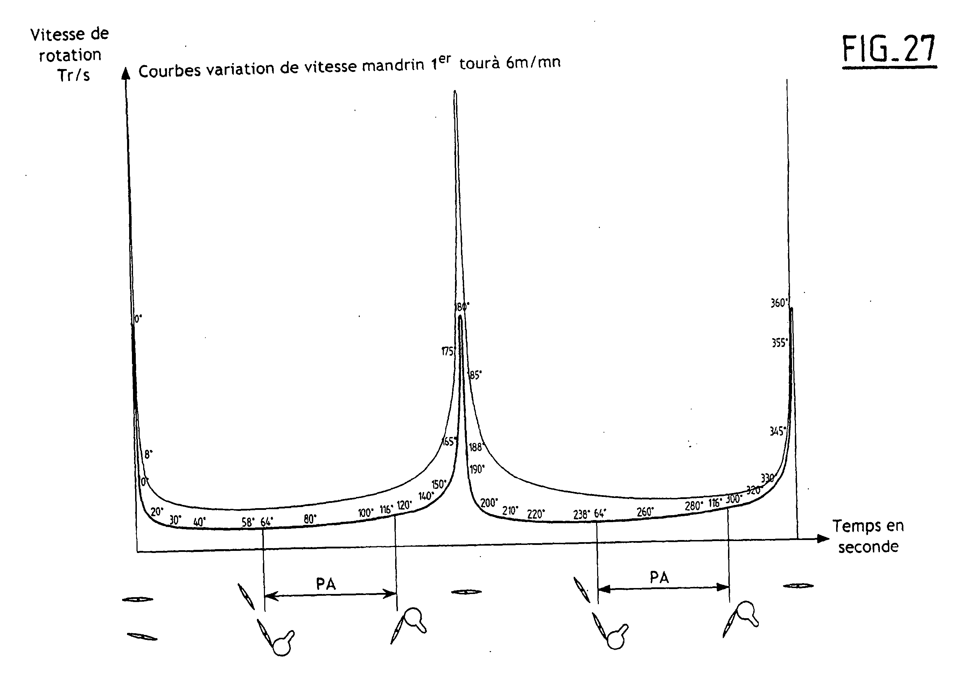

On a illustré en traits forts sur la figure 27, la courbe de variation de vitesse du mandrin 610 à l'origine de l'enroulement.

Sur la même figure 27, on a illustré en traits fins, la courbe de variation de vitesse du bras 624 portant le rouleau presseur 620.

On notera que sont illustrées sous l'axe des abscisses de la figure 27, les positions relatives du mandrin 610 et du rouleau presseur 620.

Plus précisément encore, la vitesse de rotation angulaire du mandrin 610 est corrigée au cours de l'enroulement, pour tenir compte de l'évolution du rayon d'enroulement résultant de la variation d'épaisseur de complexe accumulé sur le mandrin 610 afin de garantir la constance de vitesse linéaire de défilement.

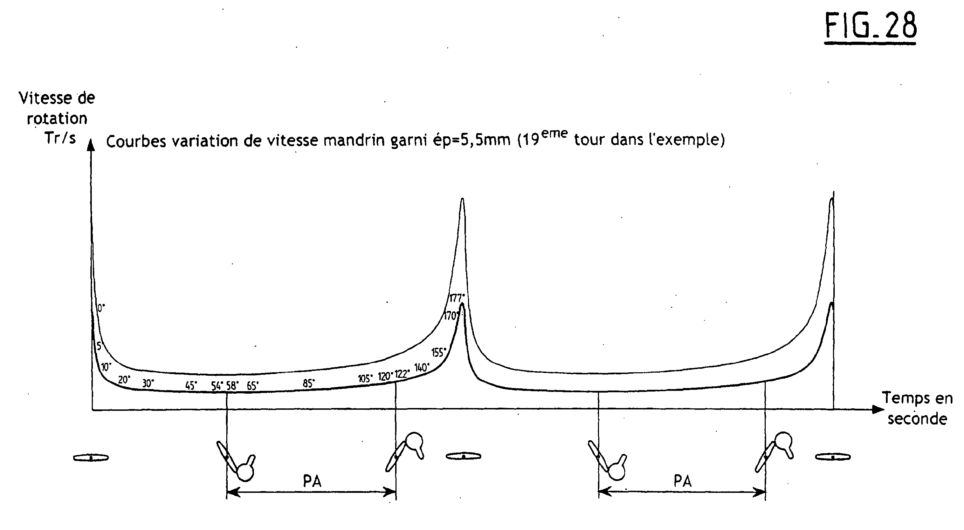

On a ainsi illustré sur la figure 28 en traits forts la courbe de variation de vitesse du mandrin 610 garnie par une épaisseur de 5,5mm de complexe (correspondant par exemple à 19 tours d'enroulement) et en traits fins la courbe de variation correspondante de vitesse du rouleau 620.

Sur les figures 27 et 28, on a repéré, sous l'axe des abscisses, sous la référence PA, les plages angulaires dans lesquelles le rouleau presseur 620 est en appui sur le mandrin 610.

On notera à l'examen des figures 27 et 28, que le vitesse de rotation du mandrin 610 et de l'équipage 624 portant le rouleau presseur 620, est élevée quand l'enroulement du complexe est opéré sur un faible rayon (c'est à dire un rayon d'enroulement de l'ordre de grandeur du petit axe du mandrin 610), soit lorsque le mandrin 610 est orienté sensiblement parallèlement au tronçon de complexe acheminé. Puis cette vitesse chute quand le rayon d'enroulement grandit (et s'approche du grand axe du mandrin 610), c'est à dire lorsque le mandrin 610 est orienté sensiblement perpendiculairement au tronçon de complexe acheminé.

Ainsi la vitesse de rotation du mandrin 610 et du rouleau presseur 620 présente une évolution cyclique : 2 pics par rotation de 360°. Cette évolution est inversement proportionnelle à l'évolution du rayon d'enroulement.

Par ailleurs on notera que le rouleau presseur 620 entre en contact, et reste en contact, avec le film complexe enroulé sur le mandrin 610, lorsque celui-ci est entraîné en rotation à basse vitesse. Cette disposition permet de garantir un bon contact entre le rouleau presseur 620 et le film enroulé et par conséquent entre les différentes couches superposées du film enroulé.

La figure 28 qui correspond à la fin d'un enroulement présente une plage d'évolution de vitesse moins étendue. En effet en raison de l'épaisseur de complexe accumulée sur le mandrin 610, le rapport de rayon d'enroulement couvre une plage moins étendue qu'à l'origine de l'enroulement.

Ainsi lors de l'enroulement d'un élément, la vitesse de rotation varie à chaque tour sur une période de 180°. De plus la durée d'enroulement par tour augmente du fait que la longueur d'enroulement sur le mandrin 610 augmente d'un tour à l'autre en raison de l'épaisseur rajoutée sur le mandrin 610.

En conséquence les vitesses et les accélérations diminuent progressivement au cours de l'enroulement.

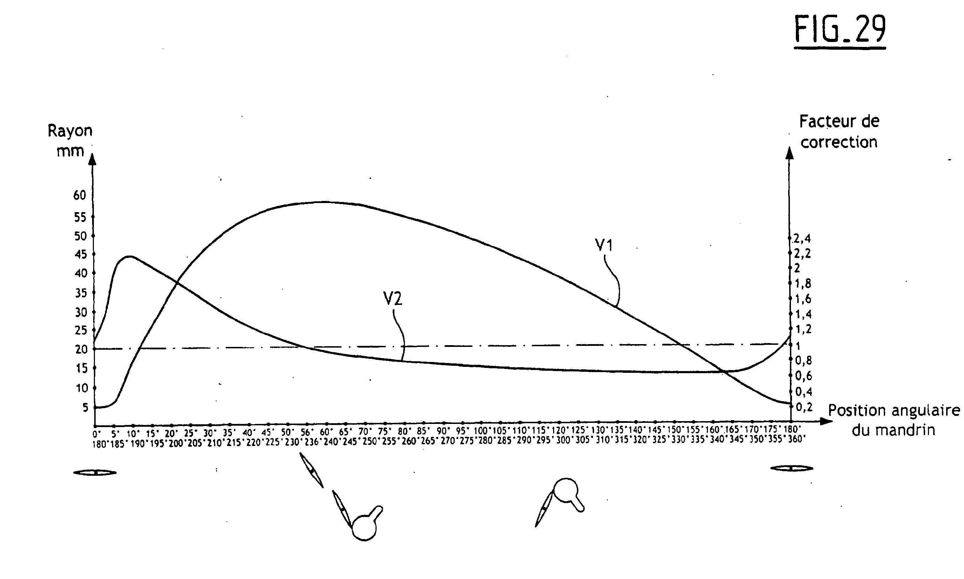

On aperçoit par ailleurs sur la figure 29, d'une part, une courbe lissée V1 de variation du rayon d'enroulement en fonction de la position angulaire du mandrin et, d'autre part, une courbe lissée V2 de variation d'un facteur de correction en fonction de cette position angulaire.

On a porté en abscisse une plage angulaire de 0 à 180°. Celle-ci couvre également la plage de 180 à 360°, les courbes précitées présentant une périodicité sur 180°. Par ailleurs on a porté sur les échelles d'ordonnées, à gauche l'amplitude du rayon d'enroulement et à droite l'amplitude du facteur de correction.

Les inventeurs ont en effet déterminé que le facteur de correction à appliquer sur l'évolution de base V1 de la vitesse de rotation angulaire tenant compte de la seule évolution du rayon d'enroulement nu en fonction de la position angulaire du mandrin, pour tenir compte de la variation d'épaisseur de l'enroulement, pouvait être assimilé à une telle courbe lissée V2 qui varie en fonction de la position angulaire du mandrin 610, tout en étant fixe pour un angle donné quelque soit le nombre de spires enroulées précédemment sur le mandrin.

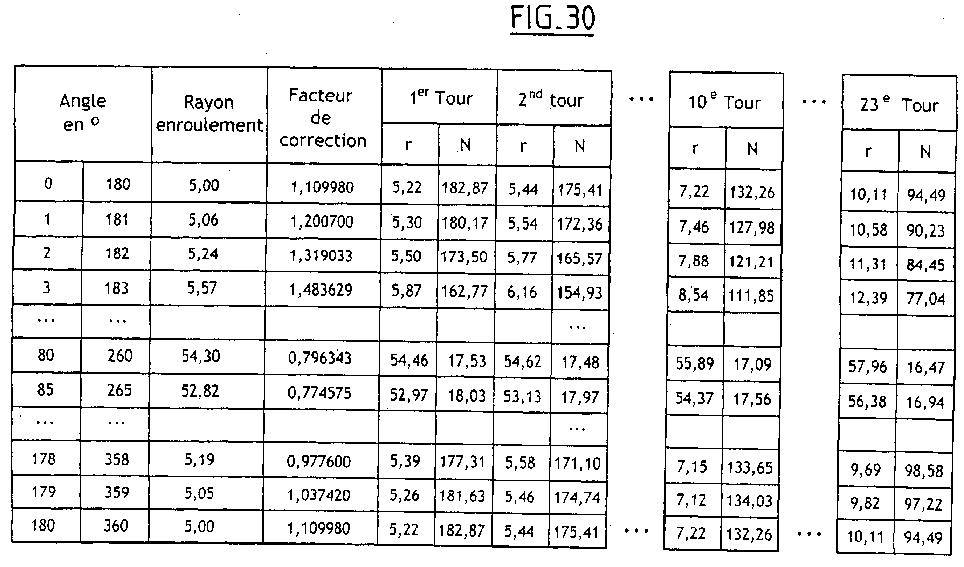

On a illustré sur la figure 30 un tableau schématisant un exemple de données utilisées dans le cadre de la présente invention pour piloter le moteur d'entraînement du mandrin 610.

On retrouve sur les deux premières colonnes du tableau de la figure 30, l'angle de rotation du mandrin.

Ces deux colonnes correspondent respectivement aux plages de 0 à 180° et de 180 à 360°, en raison de la symétrie existant entre les deux demis tours successifs d'une même spire d'enroulement. En effet une spire complète n'est enroulée qu'après une rotation de 360°. On retrouve donc la même épaisseur sur les deux faces du mandrin pendant les deux demi périodes successives de 0 à 180° et de 180 à 360° d'enroulement d'une même spire.

La troisième colonne de la figure 30 représente le rayon du mandrin 610 nu, c'est à dire à l'origine de l'enroulement.

La quatrième colonne de la figure 30 représente le facteur de correction illustré sur la figure 29.

Les paires de colonnes qui suivent sur la figure 30 représentent deux à deux, pour chaque tour d'enroulement, l'une le rayon d'enroulement, et l'autre la vitesse de rotation du mandrin 610.

Plus précisément, comme le montre le tableau de la figure 30, pour chaque tour d'enroulement, on calcule le rayon d'enroulement r sur la base de la relation :

$$r = ro + (F . n . e)$$

dans laquelle :

ro représente le rayon du mandrin (610) nu,
F représente le facteur de correction mentionné dans la quatrième colonne,
n représente le rang de la spire en cours, ie le nombre d'enroulements opéré sur le mandrin 610 et
e représente l'épaisseur du complexe enroulé sur le mandrin 610.

Puis l'on calcule la vitesse de rotation du mandrin 610 sur la base de la relation :

$$\omega = V / (2 . \Pi . r)$$

dans laquelle :

V représente la vitesse linéaire constante recherchée pour le complexe, et
r représente le rayon d'enroulement précédemment calculé.

En pratique, le pilotage du moteur d'entraînement du mandrin 610 peut être opéré, soit à l'aide de données précalculées et stockées dans des mémoires adaptées, soit à l'aide de données calculées en direct par une unité centrale sur la base, d'une part, de la loi d'évolution du rayon d'enroulement en fonction de la géométrie du mandrin 610 et d'autre part de la loi de correction dépendant de l'évolution de ce rayon en fonction de l'épaisseur de l'enroulement réalisé précédemment sur le mandrin.

Les données précitées sont appliquées successivement à chaque fraction angulaire de la rotation du mandrin 610, sur le moteur d'entraînement de celui-ci.

A titre d'exemple non limitatif, pour une vitesse linéaire de l'ordre de 6 m/mn, le mandrin 610 atteint une vitesse de l'ordre de 180 tr/mn, soit une vitesse angulaire de l'ordre de 1090 °/s, d'où une vitesse d'échantillonnage de l'ordre de 1 °/ms.

Le choix de travailler au plus près du degré impose un rafraîchissement de la consigne de vitesse moteur proche de la ms.

Dans ce contexte la consigne de vitesse destinée à être appliquée au moteur est choisie de nature numérique, pour éviter le traitement de convertisseurs analogique/numérique.

Bien évidemment, un module de contrôle assure l'asservissement complet de l'ensemble des moyens intervenant dans la réalisation de l'enroulement du complexe.

Les différents axes précités notamment les axes 102, 202, 302, des rouleaux 104, 204, 304, l'axe 611 de rotation du mandrin 610, l'axe de rotation du rouleau presseur 620 et l'axe de pivotement du bras oscillant 624, les axes des rouleaux 124, 224, 240, 250, 229, 320, 520 et 522 associés aux pellicules, les axes des rouleaux de renvoi 110, 112, 114, 221, 222, 210, 212, 226, 310, 312, 314 et les axes des rouleaux presseur 262, 264, 400, 410 sont parallèles entre eux et de préférence horizontaux.

Selon une autre caractéristique avantageuse de l'invention, le dispositif comprend un boîtier scindé en deux compartiments séparés par une cloison verticale 900 : un premier compartiment, sous atmosphère sèche contrôlée qui loge l'ensemble des moyens 100, 200, 300, 400, 500, 600 et 700 précités et un deuxième compartiment qui loge les moyens de commande et d'entraînement/motorisation associés. La cloison verticale de séparation précitée constitue le bâti support des différents axes de rotation précédemment décrits.

Le cas échéant un balayage supplémentaire d'air sec peut être prévu dans l'enceinte opérationnelle.

La présente invention permet typiquement la réalisation d'un enroulement de complexe comprenant entre 16 et 19 tours, correspondant à une longueur de complexe de l'ordre de 4 à 5,5m, soit une épaisseur totale d'enroulement de l'ordre de 5,5 mm. La vitesse de défilement du complexe est typiquement comprise entre 2 et 10 m/ mn. Elle est avantageusement de l'ordre de 6m/mm.

A titre d'exemple non limitatif le dispositif conforme à la présente invention est adapté pour traiter des laizes de complexe de largeur comprise entre 50 et 150 mm.

La présente invention offre de nombreux avantages par rapport aux moyens proposés dans l'état de la technique.

De façon non limitative on citera :

- le fait que la forme quasi plate du mandrin d'enroulement 610 évite de générer les contraintes rencontrées avec l'état de la technique, lors de la mise à plat,
- le réchauffage des complexes dans des fours et le complexage des multicouches formant cathode et collecteur sur le lithium, permettant de réaliser un collage de bonne qualité sans reprise intermédiaire des produits en optimisant le contact surfacique des couches entre elles, ceci améliorant les échanges ioniques entre les différentes couches fonctionnelles du produit final,
- le fait que toutes les fonctions du dispositif sont pilotées en automatique avec des paramétrages et des régulations précises de chaque fonction, ce qui permet d'assurer la reproductibilité avec un niveau de qualité toujours contrôlé.

On rappelle que d'une manière générale, tous les galets et rouleaux enrouleurs ou dérouleurs mis en oeuvre dans le dispositif de l'invention ont des fonctions moteur et/ou frein alternativement, selon la séquence de l'enroulement impliqué, pour garantir une traction constante sur l'ensemble des films, complexes et pellicules associés.

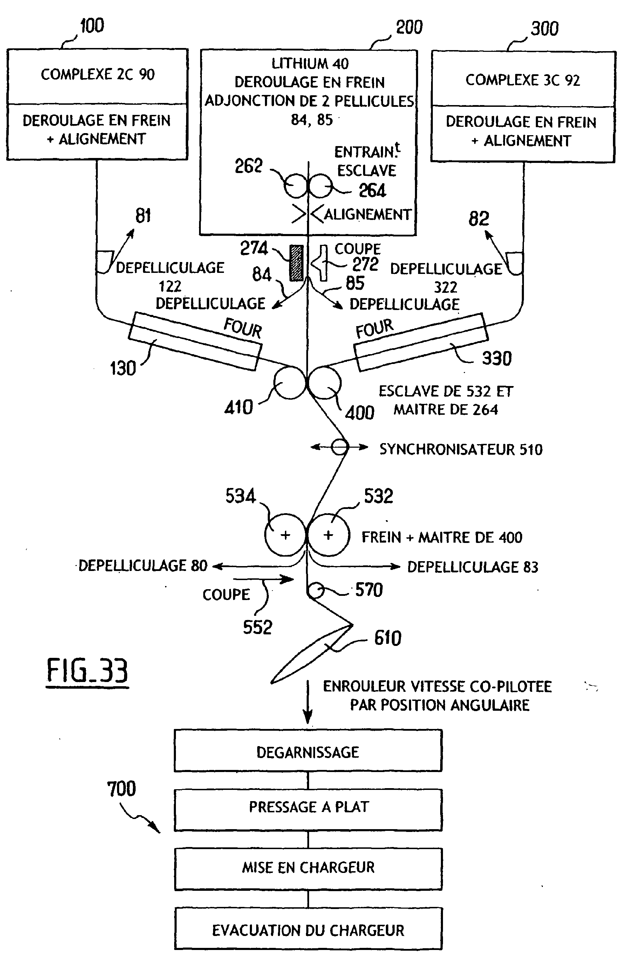

Comme indiqué précédemment, la figure 33 représente un synoptique général des moyens principaux du dispositif conforme à la présente invention.

On va maintenant décrire plus particulièrement les moyens d'asservissement d'entraînement conformes à la présente invention en regard de la figure 35 annexée.

On retrouve sur celle-ci, le mandrin 610, la paire de rouleaux 532, 534, le rouleau de détection et de synchronisation 512, la paire de rouleaux de complexage 400, 410, les bobines d'alimentation 104, 204, 304 (on rappelle que typiquement, mais non limitativement, le rouleau 204 délivre un film de lithium tandis que les rouleaux 104 et 304 délivrent respectivement des complexes trois couches et deux couches) et la paire de rouleaux pinceurs 262 et 264.

Le mandrin 610 est l'organe directeur de l'ensemble de la bobineuse. Il reçoit sa consigne de vitesse en provenance d'un module de pilotage 601.

Tous les paramètres de défilement des films constituant le complexe sont réglés sur la base de la demande émanant du mandrin 610.

La paire de rouleaux motorisés 532, 534 est pilotée en mode entraînement à l'origine d'un enroulement pour acheminer le bord avant sur le mandrin 610.

Cependant pendant l'enroulement proprement dit du film complexe sur le mandrin 610, cette paire de rouleaux 532, 534 est pilotée en frein. Elle exerce ainsi sur le film complexe une traction constante et choisie, correspondant à une consigne. La paire de rouleaux 532, 534 reçoit sa consigne de couple frein en provenance d'un module de pilotage 533.

La paire de rouleaux 532, 534 est équipée d'un codeur incrémental 535, monté sur le motoréducteur d'entraînement, permettant d'attribuer la fonction Maître à cette paire de rouleaux.

La paire de rouleaux de complexage 400, 410 située en amont est également équipée d'un codeur 411. Cette paire de rouleaux 400, 410 est pilotée en Esclave par rapport aux rouleaux précités 532 et 534. Elle fonctionne en motorisation.

Plus précisément le codeur 535 associé à la paire de rouleaux 532, 534 mesure la longueur de bande qui défile entre lesdits rouleaux 532 et 534.

L'information correspondante de longueur est appliquée via un module 1010 à la paire de rouleaux de complexage 400, 410 de sorte que celle-ci achemine, sous le contrôle de son propre codeur associé 411, une longueur identique de bande.

Le rouleau oscillant de synchronisation 512 est positionné entre les paires de rouleaux 532, 534 et 400, 410. Il est susceptible d'un faible débattement et est soumis à un effort réglable permettant d'assurer son bon contact avec la bande entre les deux paires précitées de rouleaux 532, 534 et 400, 410.

Son rôle est de surveiller les microglissements ou perturbations pouvant éventuellement désynchroniser le défilement entre les deux paires de rouleaux 532, 534 et 400, 410.

Pour ce faire le codeur 513 du rouleau 512 est positionné sur l'axe de pivotement du rouleau 512. Il est chargé de capter le débattement angulaire de ce rouleau 512.

Le codeur 513 n'est pas sollicité en cas de parfaite synchronisation entre les deux paires de rouleaux 532, 534 et 400, 410. En revanche en cas de microglissements ou de perturbations entraînant une désynchronisation, le rouleau 512 est pivoté et le codeur 513 est sollicité.

Le codeur 513 est relié au module 1010. Ainsi le rouleau de synchonisation 512 apporte via le codeur 513, une correction, par exemple de +/- 10%, sur le débit linéaire de la paire esclave de rouleaux 400, 410.

La plage de +/- 10% de correction de débit de la paire de rouleaux de complexage 400, 410 est surtout utile au lancement, après chargement de nouvelles bobines de complexe 104, 204 et 304 dans la machine. En effet l'opérateur qui charge la bobine engage les complexes sans connaître ni tenir compte de la position initiale du rouleau 512.

En régime établi, cette correction est très voisine de zéro et ne sert qu'à gérer les microglissements.

En choisissant pour valeur de pilotage, l'information de longueur de bande débitée, plutôt que la vitesse de déroulement de la bande, on obtient un système permettant de réaliser une interpolation linéaire précise et continue entre les axes électriques matérialisés par les paires de rouleaux 532, 534 et 400, 410 (on entend par « axe électrique », la combinaison axe motoréducteur-codeur et variateur associé formant les paires de rouleaux 532, 534 et 400, 410). Ceci évite de cumuler les erreurs ou les dérives de synchronisation.

Ainsi la paire de rouleaux esclave 400, 410 suit le mouvement de la paire de rouleaux maître 532, 534, tout comme si ces rouleaux étaient situés respectivement deux à deux sur un même arbre mécanique, ayant par nature à chacune de ses extrémités le même positionnement angulaire.

Comme indiqué précédemment la force F appliquée sur le rouleau 512 est générée de préférence par un vérin pneumatique. Celui-ci est alimenté par un convertisseur Signal électrique/Pression dont la pression est proportionnelle au signal électrique issu de la consigne.

Le réglage de la consigne permet d'adapter la force exercée au complexe impliqué.

En variante la force appliquée sur le rouleau 512 peut être obtenue à l'aide de tout autre moyen approprié, autre qu'un vérin pneumatique, par exemple un ressort, un contre-poids, un organe élastique, un électroaimant, etc...

Le couple de rouleaux pinceurs 262, 264 est lui même un couple de rouleaux motorisés esclaves des rouleaux pinceurs motorisés 400 et 410 situés en aval. Il est équipé d'un capteur 265.

On rappelle que le couple de rouleaux 262, 264 a pour fonction d'appeler la bande de lithium provenant du dérouleur 204 et destinée à être complexée entre les deux complexes à deux couches et trois couches provenant des dérouleurs 104 et 304.

Ainsi le couple de rouleaux 532, 534 est le maître vis à vis du couple de rouleaux amont 400, 410, lequel est lui même le maître vis à vis du couple de rouleaux amont 262, 264.

L'invention met de ce fait en oeuvre au moins deux asservissements en cascade.

Le couple de rouleaux 262, 264 est également piloté à partir d'une consigne liée à l'information de longueur issue du capteur 411 associé à la paire de rouleaux 400, 410, via un module d'asservissement 1012.

Cependant on choisit de préférence d'avoir une consigne de longueur appliquée au couple de rouleaux 264, 262, légèrement inférieure à celle appliquée au couple 400, 410, afin de micro-étirer la bande de lithium et lui enlever ses défauts géométriques.

Typiquement le couple de rouleaux aval 262, 264 est piloté par une consigne de longueur égale à 99,5% du débit linéaire du couple 400,410.

L'écart de consigne entre la consigne appliquée au couple 262, 264 et la consigne appliquée au couple 400, 410 est avantageusement paramétrable, notamment en fonction des déformations de la bande et de son épaisseur.

On rappelle que les rouleaux 262, 264 ont entre autres pour fonction de stopper le défilement de la bande de lithium en un temps très court, typiquement de l'ordre de 1 ms, lors de l'opération de coupe de la bande de lithium à la volée.

Les capteurs utilisés dans le cadre de la présente invention peuvent faire l'objet de nombreux modes de réalisation. Il peut s'agir de codeurs incrémentaux présentant un zéro au milieu de la correction, ou un codeur analogique de déplacement (inductif proportionnel, résistance variable, en fonction de sa longueur, capteur magnéto-résistif de champ magnétique, ...).

Très préférentiellement, dans le cadre de la présente invention, les codeurs 513 sont de type codeur absolu. Ainsi chaque position angulaire à un code binaire non volatil de positon absolue permettant de situer la position angulaire du rouleau 512, même après arrêt complet de la machine, sans réinitialisation du zéro au milieu du débattement.

Plus précisément encore dans le cadre de la présente invention, de préférence les capteurs de longueur sont adaptés pour mesurer des incréments de longueurs compris entre 1mm et 4$\mu$m, avantageusement entre 500$\mu$m et 8$\mu$m et très préférentiellement entre 100 et 40$\mu$m. Selon une autre caractéristique avantageuse de l'invention, les capteurs de longueur sont adaptés pour mesurer des incréments de longueurs inférieurs à 1/1000 de la longueur totale de l'enroulement, avantageusement inférieurs à 1/4000 de cette longueur et très préférentiellement inférieurs à 1/40 000 de cette longueur totale de l'enroulement.

Un autre moyen de contrôler le couple esclave 400, 410 par rapport au couple maître 532, 534 est de remplacer le rouleau 512 oscillant par un rouleau fixe fou, monté sur une jauge de contrainte. La jauge est dans ce cas sensible à la tension de bande perçue par le rouleau fou. Le couple 400, 410 reste esclave vis à vis du couple 532, 534. Le couple 400, 410 est corrigé en vitesse par rapport au couple 532, 534 en fonction de la tension de bande lue par la jauge du rouleau fou de telle sorte que la traction de bande souhaitée soit obtenue. Cette variante ne présente pas cependant les mêmes avantages que l'asservissement en longueur précédemment décrit. Elle peut en effet générer une oscillation de vitesse autour du point de consigne et donc une variation de la tension de bande.

Bien que le dépelliculage mécanique par lame, précédemment décrit, soit préféré car il évite l'introduction de produit chimique dans l'environnement du processus, en variante, on peut envisager de dépelliculer les complexes à l'aide d'un jet de solvant injecté au niveau de l'interface entre la face externe du complexe et la pellicule concernée.

Le dispositif conforme à l'invention peut également comprendre des moyens de dépelliculage comportant des moyens d'application d'un jet d'air, de préférence froid, sur la zone de divergence entre la pellicule et l'ensemble dont elle est déviée.

De même les fours à circulation d'air chaud pourront être remplacés par des rouleaux chauffants.

On a illustré sur les figures annexées et décrit précédemment une mise en oeuvre selon laquelle le complexe final de 6 couches est opéré par empilement in situ de trois complexes de base respectivement à 1, 2 et 3 couches, initialement séparés et préréalisés. En variante cependant, on peut envisager dans le cadre de la présente invention d'alimenter le mandrin 610 à l'aide d'un tel complexe de 6 couches préréalisé sur une machine adaptée. Dans ce cas l'interruption de l'anode de lithium doit être de préférence intégrée dans ce complexe. Selon encore une autre variante, dans le cadre de la présente invention, les différents complexes de base pourraient être réalisés in situ sur le dispositif de l'invention, à partir de films monocouches.

Les différents moyens mécaniques de coupe précédemment décrits pourront être remplacés par tous moyens équivalents, par exemple à base de laser.

L'asservissement en longueur préconisé dans le cadre de la présente invention offre de nombreux avantages :

- il permet de garantir une longueur totale précise et régulière d'enroulement, donc de garantir des caractéristiques homogènes pour tous les ensembles réalisés, et de garantir une localisation homogène de l'extrémité finale de l'enroulement et ainsi d'éviter toute surépaisseur,
- il permet de synchroniser parfaitement la coupe finale du complexe sur l'intervalle ménagé entre les deux tronçons de l'anode 40.

Le cas échéant, la lame oscillante 524 peut être pilotée mécaniquement ou électroniquement par la rotation du mandrin 610 de sorte que les pas successifs de découpes opérées par cette lame 524 ne soient pas rigoureusement égaux entre eux sur la longueur d'un enroulement, mais soient fonction de la position angulaire du mandrin 610, lequel déclenche ainsi le début et la fin d'une découpe. De cette façon, les découpes se retrouvent superposées dans un même secteur de l'élément enroulé et au moins approximativement alignés radialement.

## Revendications

1. Dispositif de réalisation d'ensembles de stockage d'énergie électrique comprenant des moyens d'entraînement d'un film complexe et des moyens (610) d'enroulement du film complexe, les moyens d'entraînement comprenant au moins un couple de moyens d'entraînement respectivement maître est esclave (532, 534 et 400, 410 ; 400, 410 et 262, 264), le moyen d'entraînement maître (532, 534 ; 400, 410) étant placé en aval du moyen d'entraînement esclave (400, 410 ; 262, 264) sur le chemin de défilement du film complexe, et des moyens de commande pour asservir le moyen d'entraînement (400, 410 ; 262, 264) esclave, sur le moyen d'entraînement (532, 534; 400, 410) maître, **caractérisé par le fait que** le signal d'asservissement appliqué sur le moyen d'entraînement esclave (400, 410; 262, 264) est un signal représentant de la longueur de film complexe demandé.

2. Dispositif selon la revendication 1, **caractérisé par le fait que** chaque moyen d'entraînement (532, 534 ; 400, 410 ; 262, 264) comprend une paire de rouleaux disposés respectivement de part et d'autre du film complexe.

3. Dispositif selon l'une des revendications 1 ou 2, **caractérisé par le fait qu'**il comprend un capteur (535 411) sur le moyen maître (532, 534 ; 400, 410), apte à générer le signal à la base de l'asservissement.

4. Dispositif selon la revendication 3, **caractérisé par le fait que** le signal d'asservissement appliqué sur le moyen d'entrainement esclave (262, 264) est inférieur au signal issu du capteur (411) associé au moyen maître (400, 410).

5. Dispositif selon l'une des revendications 1 à 4, **caractérisé par le fait qu'**il comprend un capteur (513) positionné sur un tronçon intermédiaire du film complexe situé entre le moyen maître (532, 534) et le moyen esclave (400, 410) d'entraînement, apte à générer un signal de correction d'asservissement.

6. Dispositif selon la revendication 5, **caractérisé par le fait que** le capteur (513) positionné sur le tronçon intermédiaire est adapté pour détecter d'éventuels microglissements entre le moyen maître (532, 534) et le moyen esclave (400, 410) d'entraînement.

7. Dispositif selon l'une des revendications 5 ou 6, **caractérisé par le fait que** le capteur (513) positionné sur le tronçon intermédiaire comprend un rouleau (512) sollicité contre le film complexe et un moyen apte à détecter l'effort ou le débattement appliqué audit rouleau (512).

8. Dispositif selon la revendication 5, **caractérise par le fait que** le rouleau (512) est monté sur un bras oscillant (514) et le moyen de détection comprend un moyen de détection du déplacement angulaire dudit bras (514),

9. Dispositif selon la revendication 8, **caractérisé par le fait que** le bras oscillant (514) sollicite le rouleau (512) contre le film complexe sous un effort réglable.

10. Dispositif selon la revendication 9, **caractérisé par le fart que** le rouleau (512) est associé à une jauge de contrainte.

11. Dispositif selon l'une des revendications 1 à 10, **caractérisé par le fait que** le moyen maître (532, 534) d'entraînement est formé d'une paire de rouleaux situés respectivement de part et d'autre du film complexe en amont d'un mandrin d'enroulement (610) tandis que le moyen d'entraînement esclave (400, 410) est formé de deux rouleaux de complexage placés en amont du moyen maître,

12. Dispositif selon l'une des revendications. 1 à 11, **caractérisé par le fait que** le moyen maître (400, 410) d'entraînement est formé d'une paire, de rouleaux de complexage situés respectivement de part et d'autre du film complexe tandis que le moyen d'entraînement esclave (262, 264) est formé de deux rouleaux situés entre des moyens d'alimentation (104, 204, 304) et le moyen maître (400, 410).

13. Dispositif selon l'une des revendications 1 à 12, **caractérisé par le fait qu'**il comprend d'une part un moyen maître principal (532, 534) d'entraînement et un moyens esclave principal d'entraînement (400, 410) asservi sur le moyen maître principal et d'autre part, en amont des moyens principaux, un moyen maître secondaire (400, 410) et un moyen esclave secondaire (262, 264) asservi sur le moyen maître secondaire,

14. Dispositif selon l'une des revendications 1 à 13, **caractérisé par le fait qu'**il comprend d'une part un moyen maître principal (532, 534) d'entraînement formé d'une paire de rouleaux situés respectivement de part et d'autre du film complexe en amont d'un mandrin d'enroulement (610) et un moyen esclave principal d'entraînement (400, 410) formé de deux rouleaux de complexage placés en amont du moyen maître principal et d'autre part un moyen maître secondaire (400, 410) d'entraînement formé d'une paire de rouleaux situés respectivement de part et d'autre du film complexe et un moyen esclave secondaire d'entraînement (262, 264) formé de deux rouleaux situés entre des moyens d'alimentation (104, 204, 304) et le moyens maître (400, 410) secondaire.

15. Dispositif selon l'une des revendications 13 ou 14, **caractérisé par le fait que** le moyen esclave principal (400, 410) et le moyen maître secondaire (400, 410) sont confondus.

16. Dispositif selon l'une des revendications 13 à 15, **caractérisé par le fait qu'**un signal d'asservissement appliqué au moyen esclave secondaire (262, 264) est inférieur à un signal issu d'un capteur (411) associé au moyen maître secondaire (400, 410).

17. Dispositif selon l'une des revendications 13 à 16, **caractérisé par le fait que** le maître principal (532, 534) est piloté en mode frein.

18. Dispositif selon l'une des revendications 1 à 17, **caractérisé par le fait que** le moyen maître (532, 534) est piloté en mode frein.

19. Dispositif selon l'une des revendications 1 à 18, **caractérisé par le fait qu'**il comprend un mandrin déroulement (610) en aval du moyen maître d'entraînement (532, 534).

20. Dispositif selon la revendication 19, **caractérisé par le fait que** le mandrin (610) présente une section droite en fuseau.

21. Dispositif selon l'une des revendications 19 ou 20, **caractérisé par le fait que** le mandrin (610) est piloté à vitesse angulaire variable pour définir une vitesse linéaire d'enroulement constante.

22. Dispositif selon l'une des revendications 1 à 21, **ca-**

**ractérisé par le fait qu'**il comprend des moyens d'alimentation en film (104, 204, 304) en amont du moyen d'entraînement esclave (262, 264).

23. Dispositif selon la revendication 22, **caractérisé par le fait que** les moyens d'alimentation en film (104, 204, 304) sont pilotés en mode frein.

24. Dispositif selon l'une des revendications 1 à 8 et 10 à 23, **caractérisé par le fait qu'**il comprend au moins un capteur de longueur adapté pour mesurer des incréments de longueurs compris entre 1mm et $4\mu m$, avantageusement entre $500\mu m$ et $8\mu m$ et très préférentiellement entre 100 et $40\mu m$.

25. Dispositif selon l'une des revendications 1 à 8 et 10 à 22, **caractérisé par le fait qu'**il comprend au moins un capteur de longueur adapté pour mesurer des incréments de longueurs inférieurs à 1/1000 de la longueur totale de l'enroulement, avantageusement inférieurs à 1/4000 de cette longueur et très préférentiellement inférieurs à 1/40 000 de cette longueur totale de l'enroulement.

26. Procédé de réalisation d'ensembles de stockage d'énergie électrique comprenant les étapes d'entraînement d'un film complexe et d'enroulement du film complexe, **caracterisé en ce qu'**il met en oeuvre des moyens d'entraînement comprenant au moins un couple de moyens d'entraînement respectivement maître et esclave (532, 534 et 400, 410; 400, 410 et 262, 264), le moyen d'entraînement maître (532, 534 ; 400, 410) étant placé en aval du moyen d'entraînement esclave (400, 410 ; 262, 264) sur le chemin de défilement du film complexe, et qu'il comprend une étape d'asservissement du moyen d'entraînement (400, 410 ; 262, 264) esclave, sur le moyen d'entraînement (532, 534; 400, 410) maître, **caractérisé par le fait que** le signal d'asservissement appliqué sur le moyen d'entraînement esclave (400, 410; 262, 264) est un signal représentatif de la longueur de film complexe demandé.

**Claims**

1. A device for making electric energy storage assemblies, including drive means for driving a laminated sheet and means (610) for winding the laminated sheet, the drive means comprising at least one pair of drive means respectively constituting master drive means and slave drive means (532 & 534 and 400 & 410; 400 & 410 and 262 & 264), the master drive means (532 & 534; 400 & 410) being placed downstream from the slave drive means (400 & 410; 262 & 264) on the travel path of the laminated sheet, and control means for servo-controlling the slave drive means (400 & 410; 262 & 264) on the master drive means (532 & 534; 400 & 410), the device being **characterized by** the fact that the servo-controlled signal applied to the slave drive means (400 & 410; 262 & 264) is a signal representative of the requested length of laminated sheet.

2. A device according to claim 1, **characterized by** the fact that each drive means (532 & 534; 400 & 410; 262 & 264) comprises a pair of rollers disposed respectively on either side of the laminated sheet.

3. A device according to claim 1 or claim 2, **characterized by** the fact that it includes a sensor (535; 411) on the master drive means (532 & 534; 400 & 410) suitable for generating the signal on which servo-control is based.

4. A device according to claim 3, **characterized by** the fact that the servo-controlled signal applied to the slave drive means (262 & 264) is less than the signal coming from the sensor (411) associated with the master drive means (400 & 410).

5. A device according to any one of claims 1 to 4, **characterized by** the fact that it includes a sensor (513) positioned on an intermediate segment of the laminated sheet situated between the master drive means (532 & 534) and the slave drive means (400 & 410), suitable for generating a servo-control correction signal.

6. A device according to claim 5, **characterized by** the fact that the sensor (513) placed on the intermediate segment is adapted to detect any microslips between the master drive means (532 & 534) and the slave drive means (400 & 410).

7. A device according to claim 5 or claim 6, **characterized by** the fact that the sensor (513) placed on the intermediate segment comprises a roller (512) urged against the laminated sheet and means suitable for detecting the force or the displacement applied to said roller (512).

8. A device according to claim 5, **characterized by** the fact that the roller (512) is mounted on an oscillating arm (514) and the detector means comprises means for detecting the angular displacement of said arm (514).

9. A device according to claim 8, **characterized by** the fact that the oscillating arm (514) urges the roller (512) against the laminated sheet with an adjustable amount of force.

10. A device according to claim 9, **characterized by** the fact that the roller (512) is associated with a strain gauge.

11. A device according to any one of claims 1 to 10, **characterized by** the fact that the master drive means (532 & 534) is formed by a pair of rollers situated respectively on either side of the laminated sheet upstream from a winding mandrel (610) while the slave drive means (400 & 410) is formed by two laminator rollers placed upstream from the master drive means.

12. A device according to any one of claims 1 to 11, **characterized by** the fact that the master drive means (400 & 410) is formed by a pair of laminator rollers situated respectively on either side of the laminated sheet, while the slave drive means (262 & 264) is formed by two rollers situated between feed means (104, 204, 304) and the master drive means (400 & 410).

13. A device according to any one of claims 1 to 12, **characterized by** the fact that it comprises firstly main master drive means (532 & 534) and main slave drive means (400 & 410) servo-controlled on the main master drive means, and secondly, upstream from the main drive means, secondary master drive means (400 & 410) and secondary slave drive means (262 & 264) servo-controlled on the secondary master drive means.

14. A device according to any one of claims 1 to 13, **characterized by** the fact that it comprises firstly main master drive means (532 & 534) formed by a pair of rollers situated respectively on either side of the laminated sheet upstream from a winder mandrel (610), and main slave drive means (400 & 410) formed by two laminator rollers placed upstream from the main master drive means, and secondly secondary master drive means (400 & 410) formed by a pair of rollers situated respectively on either side of the laminated sheet, and secondary slave drive means (262 & 264) formed by two rollers situated between feed means (104, 204, 304) and the secondary master drive means (400 & 410).

15. A device according to claim 13 or claim 14, **characterized by** the fact that the main slave drive means (400 & 410) and the secondary master drive means (400 & 410) are the same drive means.

16. A device according to any one of claims 13 to 15, **characterized by** the fact that a servo-controlled signal applied to the secondary slave drive means (262 & 264) is less than the signal coming from a sensor (411) associated with the secondary master drive means (400 & 410).

17. A device according to any one of claims 13 to 16, **characterized by** the fact that the main master drive means (532 & 534) is controlled to operate in brake mode.

18. A device according to any one of claims 1 to 17, **characterized by** the fact that the main master drive means (532 & 534) is controlled to operate in brake mode.

19. A device according to any one of claims 1 to 18, **characterized by** the fact it includes a winder mandrel (610) downstream from the master drive means (532 & 534).

20. A device according to claim 19, **characterized by** the fact that the mandrel (610) presents a right section that is timezone-shaped.

21. A device according to claim 19 or claim 20, **characterized by** the fact that the mandrel (610) is controlled to operate at a varying angular speed so as to define winding at a constant linear speed.

22. A device according to any one of claims 1 to 21, **characterized by** the fact that it includes sheet feed means (104, 204, 304) upstream from the slave drive means (262 & 264).

23. A device according to claim 22, **characterized by** the fact that the sheet feed means (104, 204, 304) are controlled to operate in brake mode.

24. A device according to any one of claims 1 to 8 and 10 to 23, **characterized by** the fact that it includes at least one length sensor adapted to measure length increments lying in the range 1 mm to 4 $\mu$m, advantageously in the range 500 $\mu$m to 8 $\mu$m, and most preferably in the range 100 $\mu$m to 40 $\mu$m.

25. A device according to any one of claims 1 to 8 and 10 to 22, **characterized by** the fact that it includes at least one length sensor adapted to measure length increments that are less than 1/1000th of the total length of the winding, advantageously less than 1/4000th of said length, and most preferably less than 1/40,000th of said total length of the winding.

26. A method of making electric energy storage assemblies, the method comprising the steps of: driving a laminated sheet and winding the laminated sheet, the method being **characterized in that** it implements drive means comprising at least one pair of drive means respectively constituting master drive means and slave drive means (532 & 534 and 400 & 410; 400 & 410 and 262 & 264), the master drive means (532 & 534; 400 & 410) being placed downstream from the slave drive means (400 & 410; 262 & 264) on the travel path of the laminated sheet, and control means for servo-controlling the slave drive means (400 & 410; 262 & 264) on the master drive means (532 & 534; 400 & 410), the method being **characterized by** the fact that the servo-controlled signal applied on the slave drive means (400 & 410; 262 & 264) is a signal representative of the requested length of laminated sheet.

**Patentansprüche**

1. Vorrichtung zur Herstellung von Einheiten zur Speicherung elektrischer Energie umfassend Mittel zum Antrieb eines komplexen Films und Mittel (610) zur Aufwicklung des komplexen Films, wobei die Antriebsmittel wenigstens ein Paar jeweils Leit- und Folge- (Master-Slave-) Antriebsmittel (532, 534 und 400, 410; 400, 410 und 262, 264) umfassen, wobei auf dem Abspulweg des komplexen Films das Leitantriebsmittel (532, 534; 400, 410) stromabwärts des Folgeantriebsmittels (400, 410; 262, 264) angeordnet ist, und Steuerungsmittel zur Steuerung des Folgeantriebsmittels (400, 410; 262, 264) an dem Leitantriebsmittel (532, 534; 400, 410), **dadurch gekennzeichnet, dass** das Steuersignal, welches an das Folgeantriebsmittel (400, 410; 262, 264) abgegeben wird, ein Signal ist, welches repräsentativ für die Länge des gewünschten komplexen Films ist.

2. Vorrichtung gemäß Anspruch 1, **dadurch gekennzeichnet, dass** jedes Antriebsmittel (532, 534; 400, 410; 262, 264) ein Paar Walzen umfasst, die jeweils beiderseits des komplexen Films angeordnet sind.

3. Vorrichtung gemäß einem der Ansprüche 1 oder 2, **dadurch gekennzeichnet, dass** sie einen Signalgeber (535; 411) an dem Leitantriebsmittel (532, 534; 400, 410) umfasst, welcher das Signal auf Grundlage der Steuerung erzeugen kann.

4. Vorrichtung gemäß Anspruch 3, **dadurch gekennzeichnet, dass** das Steuersignal, welches an das Folgeantriebsmittel (262, 264) abgegeben wird, geringer ist als das Signal, welches von dem Signalgeber (411) stammt, der mit dem Leitantriebsmittel (400, 410) verbunden ist.

5. Vorrichtung gemäß einem der Ansprüche 1 bis 4, **dadurch gekennzeichnet, dass** sie einen Signalgeber (513) umfasst, der auf einem Zwischenabschnitt des komplexen Films, der sich zwischen dem Leitantriebsmittel (532, 534) und dem Folgeantriebsmittel (400, 410) befindet, angeordnet ist und ein Steuerkorrektursignal erzeugen kann.

6. Vorrichtung gemäß Anspruch 5, **dadurch gekennzeichnet, dass** der Signalgeber (513), der auf dem Zwischenabschnitt angeordnet ist, ausgebildet ist, um etwaige Mikroabweichungen zwischen dem Leitantriebsmittel (532, 534) und dem Folgeantriebsmittel (400, 410) zu detektieren.

7. Vorrichtung gemäß einem der Ansprüche 5 oder 6, **dadurch gekennzeichnet, dass** der Signalgeber (513), welcher auf dem Zwischenabschnitt angeordnet ist, eine Walze (512), welche eine Belastung auf den komplexen Film ausübt, und ein Mittel, welches die Beanspruchung oder die Ausfederung, die auf diese Walze (512) ausgeübt wird, detektieren kann, umfasst.

8. Vorrichtung gemäß Anspruch 5, **dadurch gekennzeichnet, dass** die Walze (512) auf einem Schwenkarm (514) montiert ist und das Detektionsmittel ein Mittel zur Detektion der Winkelverschiebung des Arms (514) umfasst.

9. Vorrichtung gemäß Anspruch 8, **dadurch gekennzeichnet, dass** der Schwenkarm (514) die Walze (512) gegen den komplexen Film mit einer regulierbaren Belastung drückt.

10. Vorrichtung gemäß Anspruch 9, **dadurch gekennzeichnet, dass** die Walze (512) mit einem Dehnungsmessgerät verbunden ist.

11. Vorrichtung gemäß einem der Ansprüche 1 bis 10, **dadurch gekennzeichnet, dass** das Leitantriebsmittel (532, 534) von einem Paar Walzen gebildet wird, die jeweils beiderseits des komplexen Films stromaufwärts einer Wickelhülse (610) angeordnet sind, während das Folgeantriebsmittel (400, 410) von zwei Komplexwalzen gebildet wird, die stromaufwärts des Leitantriebsmittels angeordnet sind.

12. Vorrichtung gemäß einem der Ansprüche 1 bis 11, **dadurch gekennzeichnet, dass** das Leitantriebsmittel (400, 410) von einem Paar Komplexwalzen gebildet wird, die jeweils beiderseits des komplexen Films angeordnet sind, während das Folgeantriebsmittel (262, 264) von zwei Walzen gebildet wird, die zwischen Materialzufuhrmitteln (104, 204, 304) und dem Leitantriebsmittel (400, 410) angeordnet sind.

13. Vorrichtung gemäß einem der Ansprüche 1 bis 12, **dadurch gekennzeichnet, dass** sie einerseits ein Hauptleitantriebsmittel (532, 534) und ein Hauptfolgeantriebsmittel (400, 410), das an dem Hauptleitantriebsmittel gesteuert wird, umfasst, und andererseits, stromaufwärts der Hauptantriebsmittel, ein Sekundärleitantriebsmittel (400, 410) und ein Sekundärfolgeantriebsmittel (262, 264), das an dem Sekundärleitantriebsmittel gesteuert wird, umfasst.

14. Vorrichtung gemäß einem der Ansprüche 1 bis 13, **dadurch gekennzeichnet, dass** sie einerseits ein Hauptleitantriebsmittel (532, 534), das aus einem Paar Walzen gebildet wird, die jeweils beiderseits des komplexen Films stromaufwärts einer Wickelhülse (610) angeordnet sind, und ein Hauptfolgeantriebsmittel (400, 410), das von zwei Komplexwalzen gebildet wird, die stromaufwärts des Hauptleitantriebsmittels angeordnet sind, umfasst, und andererseits ein Sekundärleitantriebsmittel (400, 410), das aus einem Paar Walzen gebildet wird, die jeweils beiderseits des komplexen Films angeordnet sind, und ein Sekundärfolgeantriebsmittel (262, 264), welches von zwei Walzen gebildet wird, die zwischen den Materialzufuhrmitteln (104, 204, 304) und den Sekundärleitantriebsmitteln (400, 410) angeordnet sind, umfasst.

15. Vorrichtung gemäß einem der Ansprüche 13 oder 14, **dadurch gekennzeichnet, dass** das Hauptleitantriebsmittel (400, 410) und das Sekundärfolgeantriebsmittel (400, 410) vertauscht sind.

16. Vorrichtung gemäß einem der Ansprüche 13 bis 15, **dadurch gekennzeichnet, dass** ein Steuersignal, welches an das Sekundärfolgeantriebsmittel (262, 264) abgegeben wird, geringer ist als das Signal, welches von einem Signalgeber (411) stammt, der mit dem Sekundärleitantriebsmittel (400, 410) verbunden ist.

17. Vorrichtung gemäß einem der Ansprüche 13 bis 16, **dadurch gekennzeichnet, dass** das Hauptleitantriebsmittel (532, 534) im Bremsmodus gesteuert wird.

18. Vorrichtung gemäß einem der Ansprüche 1 bis 17, **dadurch gekennzeichnet, dass** das Leitantriebsmittel (532, 534) im Bremsmodus gesteuert wird.

19. Vorrichtung gemäß einem der Ansprüche 1 bis 18, **dadurch gekennzeichnet, dass** sie eine Wickelhülse (610) stromabwärts des Leitantriebsmittels (532, 534) umfasst.

20. Vorrichtung gemäß Anspruch 19, **dadurch gekennzeichnet, dass** die Hülse (610) einen rechten Spindelabschnitt aufweist.

21. Vorrichtung gemäß einem der Ansprüche 19 oder 20, **dadurch gekennzeichnet, dass** die Hülse (610) mit variabler Winkelgeschwindigkeit gesteuert wird, um eine lineare Geschwindigkeit der konstanten Wicklung zu definieren.

22. Vorrichtung gemäß einem der Ansprüche 1 bis 21, **dadurch gekennzeichnet, dass** sie Filmmaterialzufuhrmittel (104, 204, 304) stromaufwärts des Folgeantriebsmittels (262, 264) umfasst.

23. Vorrichtung gemäß Anspruch 22, **dadurch gekennzeichnet, dass** die Filmmaterialzufuhrmittel (104, 204, 304) im Bremsmodus gesteuert werden.

24. Vorrichtung gemäß einem der Ansprüche 1 bis 8 und 10 bis 23, **dadurch gekennzeichnet, dass** sie wenigstens ein Längenmessgerät umfasst, das ausgebildet ist, um Längeninkremente zwischen 1 mm und 4 $\mu$m, bevorzugt zwischen 500 $\mu$m und 8 $\mu$m, und bevorzugter zwischen 100 und 40 $\mu$m, zu messen.

25. Vorrichtung gemäß einem der Ansprüche 1 bis 8 und 10 bis 22, **dadurch gekennzeichnet, dass** sie wenigstens ein Längenmessgerät umfasst, das ausgebildet ist, um Längeninkremente unter 1/1000 der Gesamtwicklungslänge, bevorzugt unter 1/4000 dieser Länge, und bevorzugter unter 1/40000 dieser Gesamtwicklungslänge, zu messen.

26. Verfahren zur Herstellung von Einheiten zur Speicherung elektrischer Energie umfassend Schritte zum Antrieb eines komplexen Films und zur Wicklung des komplexen Films, **dadurch gekennzeichnet, dass** es Antriebsmittel verwendet, welche wenigstens ein Paar jeweils Leit- und Folge- (Master-Slave-) Antriebsmittel (532, 534 und 400, 410; 400, 410 und 262, 264) umfassen, wobei auf dem Abspulweg des komplexen Films das Leitantriebsmittel (532, 534; 400, 410) stromabwärts des Folgeantriebsmittels (400, 410; 262, 264) angeordnet ist, und dass es einen Schritt der Steuerung des Folgeantriebsmittels (400, 410; 262, 264) an dem Leitantriebsmittel (532, 534; 400, 410) umfasst, **dadurch gekennzeichnet, dass** das Steuersignal, welches an das Folgeantriebsmittel (400, 410; 262, 264) abgegeben wird, ein Signal ist, welches repräsentativ für die Länge des gewünschten komplexen Films ist.

FIG.1

EP 1 590 851 B1

FIG.2

FIG.3

FIG.4

FIG.5

FIG.6

FIG.22

FIG_7

EP 1 590 851 B1

FIG. 8

FIG. 31

## FIG.9

90

81
50
60
80

## FIG.10

50
60
80

## FIG.11

40

## FIG.12

94

85
40
84

## FIG.13

92

83
10
20
30
82

## FIG.14

83
10
20
30

## FIG.15

96

83
10
20
30
40
50
60
80

## FIG.16

10
20
30
40
50
60

## FIG.17

50
60
80

## FIG.18

85
40
84

## FIG.19

30
20
10
83

## FIG.20

83
10
20
30
40
50
60
80

## FIG_21

FIG. 23

96   526   528

520   529   524

FIG. 24

521

P1   L1   -96-

FIG. 25

96   521

523

FIG. 26

96   521   525

522

FIG.27

FIG.28

Vitesse de rotation Tr/s

Courbes variation de vitesse mandrin garni ép=5,5mm (19$^{eme}$ tour dans l'exemple)

Temps en seconde

PA

PA

EP 1 590 851 B1

FIG.29

EP 1 590 851 B1

## FIG.30

| Angle en ° | | Rayon enroulement | Facteur de correction | 1er Tour | | 2nd tour | | ... | 10e Tour | | ... | 23e Tour | |
|---|---|---|---|---|---|---|---|---|---|---|---|---|---|
| | | | | r | N | r | N | | r | N | | r | N |
| 0 | 180 | 5,00 | 1,109980 | 5,22 | 182,87 | 5,44 | 175,41 | | 7,22 | 132,26 | | 10,11 | 94,49 |
| 1 | 181 | 5,06 | 1,200700 | 5,30 | 180,17 | 5,54 | 172,36 | | 7,46 | 127,98 | | 10,58 | 90,23 |
| 2 | 182 | 5,24 | 1,319033 | 5,50 | 173,50 | 5,77 | 165,57 | | 7,88 | 121,21 | | 11,31 | 84,45 |
| 3 | 183 | 5,57 | 1,483629 | 5,87 | 162,77 | 6,16 | 154,93 | | 8,54 | 111,85 | | 12,39 | 77,04 |
| ... | ... | | | | | | ... | | | | | | |
| 80 | 260 | 54,30 | 0,796343 | 54,46 | 17,53 | 54,62 | 17,48 | | 55,89 | 17,09 | | 57,96 | 16,47 |
| 85 | 265 | 52,82 | 0,774575 | 52,97 | 18,03 | 53,13 | 17,97 | | 54,37 | 17,56 | | 56,38 | 16,94 |
| ... | ... | | | | | | ... | | | | | | |
| 178 | 358 | 5,19 | 0,977600 | 5,39 | 177,31 | 5,58 | 171,10 | | 7,15 | 133,65 | | 9,69 | 98,58 |
| 179 | 359 | 5,05 | 1,037420 | 5,26 | 181,63 | 5,46 | 174,74 | | 7,12 | 134,03 | | 9,82 | 97,22 |
| 180 | 360 | 5,00 | 1,109980 | 5,22 | 182,87 | 5,44 | 175,41 | | 7,22 | 132,26 | | 10,11 | 94,49 |

EP 1 590 851 B1

FIG.32

81,82,84,85,80,83

90,92,94,96

230

232

**FIG_33**

FIG.34
ART ANTERIEUR

FIG.35

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2737339 A
- FR 2759087 A
- FR 2759211 A
- FR 2808622 A
- GB 5433929 A